## Europäisches Patentamt

**European Patent Office**

**Office européen des brevets**

(19)

(11) Veröffentlichungsnummer: **0 267 301**

**A1**

(12)

# EUROPÄISCHE PATENTANMELDUNG

Veröffentlicht nach Art. 158 Abs. 3 EPÜ

(21) Anmeldenummer: 87903832.1

(22) Anmeldetag: 14.05.87

Daten der zugrundeliegenden internationalen Anmeldung:

(86) Internationale Anmeldenummer:
PCT/SU87/00058

(87) Internationale Veröffentlichungsnummer:
WO87/07419 (03.12.87 87/27)

(51) Int. Cl.³: **G 08 C 19/38**
**H 02 K 29/06**

(30) Priorität: 19.05.86 SU 4087425

(43) Veröffentlichungstag der Anmeldung:
18.05.88 Patentblatt 88/20

(84) Benannte Vertragsstaaten:
BE DE FR GB IT

(71) Anmelder: BELORUSSKY GOSUDARSTVENNY
UNIVERSITET IMENI V.I.LENINA
Leninsky pr., 4
Minsk, 220080(SU)

(72) Erfinder: DIMITROV, Dimitr Tsonev
ul. Avgusta Troyana, 30
Stara Zagora(BG)

(72) Erfinder: MATJUKHINA, Ljudmila Ivanova
ul. Kuznechnaya, 3-92
Minsk, 220039(SU)

(72) Erfinder: MIKHALEV, Alexandr Sergeevich
ul. Kuznechnaya, 3-92
Minsk, 220039(SU)

(72) Erfinder: CHUSHENKOV, Igor Mikhailovich
pr. Partizansky, 74-25
Minsk, 220021(SU)

(74) Vertreter: Lehn, Werner, Dipl.-Ing. et al,
Hoffmann, Eitle & Partner Patentanwälte Arabellastrasse
4
D-8000 München 81(DE)

(54) **SYSTEM ZUR FERNÜBERTRAGUNG EINES DREHWINKELS UND DER KRAFT ZWISCHEN TREIBENDER UND ANGETRIEBENER WELLE.**

(57) System der Drehwinkel- und Kraft-Fernübertragung zwischen einer Führungs- und einer Stellwelle, das eine Führungs- und eine Stellsynchronmaschine (1 bzw. 2) enthält, deren Wellen Positionsgeber (9, 10) aufweisen, die elektrisch mit Eingängen (11, 12) einer Sollwertvorgabeeinheit (13) der Orientierung der Ständermagnetfelder der Synchronmaschinen sowie mit Informationseingängen (15, 14) einer Sollwertvorgabeeinrichtung (16) der Amplitude der Ständermagnetfelder der Synchronmaschinen verbunden sind, deren Ausgang elektrisch mit dem Steuereingang (21) einer Formierungseinheit (22) des Stroms in den Wicklungen der Synchronmaschinen verbunden ist, und an deren Sollwertvorgabeeingang (23) der Ausgang der Sollwertvorgabeeinheit (13) der Orientierung angeschlossen ist. Die Ausgänge der Formierungseinheit (22) des Stroms sind an die elektrisch miteinander verbundenen, entsprechenden Wicklungen der Synchronmaschinen (1, 2) angeschlossen. Die Sollwertvorgabeeinrichtung (16) der Amplitude enthält eine Reihenschaltung aus einer Einheit (17) der Ermittlung der vorgegebenen Verstimmung der Wellen der Synchronmaschinen, die einen Sollwertvorgabeeingang (20) aufweist, dem ein Signal zugeführt wird, das dem Masstabkoeffizienten der auf die Welle (3) der Synchronmaschine (1) rückgeführten Kraft entspricht, une einer Vergleichseinheit (18).

EP 0 267 301 A1

./...

FIG. 1

# SYSTEM DER DREHWINKEL- UND KRAFT-FERNÜBERTRAGUNG ZWISCHEN EINER FÜHRUNGS- UND EINER STELLWELLE

## Anwendungsgebiet der Erfindung

Die Erfindung bezieht sich auf elektrische Maschinen, insbesondere auf Systeme der Fernübertragung von Drehwinkel und Kraft zwischen einer Führungs- und einer Stellwelle.

## Charakteristik der bekannten technischen Lösungen

Z.Z. werden Master-Slave-Manipulatoren hauptsächlich in extremalen Fällen angewendet, die für die Arbeit eines Operatuers gefährlich sind. Deshalb werden an die Systeme der Drehwinkel- und Kraft-Fernübertragung zwischen der Führungs- und der Stellwelle, die kinematisch mit entsprechenden Gliedern des Master-Slave-Manipulators gekoppelt sind und ihre adequate räumliche Lage sicherstellen, solche Forderungen gestellt wie hohe Betriebssicherheit, Langlebigkeit und Übereinstimmung mit Daten des Operatuers, der über wesentliche adaptive Möglichkeiten verfügt. Unter anderen ist das Vorhandensein eines statischen Fehlers bei der Übertragung des Winkels und eine relativ nicht sehr hohe Genauigkeit bei der Übertragung der Kräfte auf die Stellwelle zulässig, die im Bereich der physischen Möglichkeiten eines Menschen liegen müssen. Unterdessen kann die Belastung an der Stellwelle in sehr weitem Bereich variiren, u.zw. von praktisch nicht wahrnehmbaren bis auf Kräfte, die außerhalb seiner physischen Möglichkeiten liegen. Bei der Änderung der Belastung an der Stellwelle in einem weiten Bereich ist deshalb zur Gewährleistung der Funktionsfähigkeit des Master-Slave-Systems eine Änderung des Maßstabkoeffizienten der Rückführungskraft während der Arbeit des Systems erforderlich.

So ist ein System der Fernübertragung des Drehwinkels und der Kraft zwischen der Führungs- und der Stell-

welle bekannt, das kinematisch mit der Führungs- und der Stellwelle verbundene Gleichstrom-Kommutatormotoren, deren Wicklungen mit Ausgängen von Verstärkern verbunden sind, Positionsgeber für die Wellen der Elektromotoren, die mit Eingängen eines ersten Vergleichselementes gekoppelt sind, und Drehmomentgeber enthält, von welchen der eine mit dem Eingang des zweiten Vergleichselementes verbunden ist, und der zweite am anderen Eingang des zweiten Vergleichselementes über einen proportionalen Signalwandler liegt, der über eine Sollwert-Vorgabeeinheit verfügt. Der Ausgang des zweiten Vergleichselementes ist an den Eingang des Verstärkers des Führungsmotors und der Ausgang des ersten Vergleichselementes an den Eingang des Verstärkers des Stellmotors angeschlossen (Egorov I.N. u.a. "Projektierung von bilateral wirkenden Nachführungssystemen", 1980, Mashinostroenie (Moskau), S. 53-58).

Im beschriebenen System gewährleisten das erste Vergleichselement, die Positionsgeber und der Stellmotor mit dem Verstärker die Fernübertragung des Winkels, während das zweite Vergleichselement, die Drehmomentgeber und der Führungsmotor mit dem Verstärker für die Übertragung der Kräfte auf die Stellwelle sorgen. Je nach dem Bedarf führt der Operateur eine Änderung des Übertragungsfaktors des Wandlers nach dem Sollwertvorgabeeingang aus, wodurch der Übertragungsfaktor des Wandlers geändert wird, mit dem das Signal vom Drehmomentgeber der Belastung multipliziert wird. Dabei liefert das Vergleichselement ein Differenzsignal zwischen dem Signal, das dem vom Operateur erzeugten Drehmoment entspricht, und dem Ausgangssignal des Wandlers. Somit gewährleistet das vom Führungsmotor entwickelte Drehmoment die Übertragung des vom Operateur vorgegebenen Teils des Drehmomentes der Belastung auf die Führungswelle, was einer Änderung des Maßstabkoeffizienten der auf die Führungswelle übertragenen Kraft entspricht. Die Anwendung von Kommutatormotoren setzt jedoch die Betriebssicherheit und die Langlebigkeit des beschriebenen Systems dadurch herab, daß die Kommutatormotoren eine Bürsteneinheit enthalten, die besonders unter extremalen Bedingungen schnell ausfällt. Das Vorhandensein von Drehmomentgebern führt infolge der Komplizierung des Systems ebenfalls zur Verminderung seiner Zuverlässigkeit.

Die angegebenen Nachteile sind teilweise in einem System der Fernübertragung des Drehwinkels und der Kraft zwischen der Führungs- und der Stellwelle beseitigt, welches kinematisch mit der Führungs- und der Stellwelle verbundene Führungs- und Stell-Synchronmaschinen mit Positionsgebern ihrer Wellen enthält, deren Ausgänge an die Eingänge eines Vergleichselementes angeschlossen sind, dessen Ausgang mit dem Steuereingang der Formierungseinheit des Stroms in den Wicklungen von Synchronmaschinen verbunden ist. Die entsprechenden Wicklungen der Synchronmaschinen sind untereinander elektrisch verbunden und an die Ausgänge der Stromformierungseinheit angeschlossen. Der Ausgang des Positionsgebers der Welle der Stellsynchronmaschine ist mit dem Sollwertvorgabeeingang der Formierungseinheit des Stroms in den Wicklungen von Führungs- und Stellsynchronmaschinen verbunden (SU, A, 1176425).

Das angegebene System zeichnet sich durch eine höhere Zuverlässigkeit und Langlebigkeit gegenüber dem oben beschriebenen dank der Ausnutzung von Synchronmaschinen aus, die keinen Kommutator mit Bürsten enthalten und dadurch eine höhere Betriebssicherheit unter extremalen Bedingungen aufweisen. Das Nichtvorhandensein von Drehmomentgebern der Belastung trägt ebenfalls zur Erhöhung der Zuverlässigkeit des Systems bei. Jedoch weist das System eine solche Struktur auf, daß der Maßstabkoeffizient der Rückführungskräfte belastungsabhängig ist, und es fällt dem Operateur schwer, die auf die Stellwelle wirkenden Kräfte einzuschätzen. Außerdem kann der Operateur die vorgegebene Größe des Maßstabkoeffizienten während des Arbeitsablaufs nicht einstellen, was den

-4-

Änderungsbereich der Belastung an der Stellwelle schmälert.

Bekannt ist auch ein System der Fernübertragung des Drehwinkels und der Kraft zwischen der Führungs- und der Stellwelle, das eine Führungs- und eine Stellsynchronmaschine enthält, deren Wellen mit entsprechenden Führungs- und Stellwellen verbunden sind und über Positionsgeber verfügen, die elektrisch mit Eingängen einer Sollwertvorgabeeinheit der Orientierung von Ständermagnetfeldern der Führungs- und der Stellsynchronmaschine und Informationseingängen einer Sollwertvorgabeeinrichtung der Amplitude von Ständermagnetfeldern der Führungs- und Stellsynchronmaschinen verbunden sind, deren Ausgang mit dem Steuereingang der Formierungseinheit des Stroms in Wicklungen der Führungs- und der Stellsynchronmaschine elektrisch verbunden ist, und an deren Sollwertvorgabeeingang der Ausgang der Solwertvorgabeeinheit der Orientierung von Ständermagnetfeldern der Führungs- und der Stellsynchronmaschine geschaltet ist, während deren Eingänge an die elektrisch miteinander verbundenen, entsprechenden Wicklungen der Führungs- und der Stellsynchronmaschine angeschlossen sind (SU, A, 1257690).

Im angegeben System ist die Sollwertvorgabeeinrichtung der Amplitude von Ständermagnetfeldern auf der Basis eines Vergleichselementes ausgeführt. Die Sollwertvorgabeeinheit der Orientierung der Ständermagnetfelder enthält einen Addierer, dessen Eingänge als Eingänge der Sollwertvorgabeeinheit der Orientierung dienen, während der Ausgang an den Eingang einer Halbierungsschaltung angeschlossen ist, deren Ausgang den Ausgang der Sollwertvorgabeeinheit der Orientierung darstellt.

Das angegebene System weist eine solche Struktur auf, daß der Maßstabkoeffizient der Rückführungskraft während des Arbeitsablaufs des Systems unverändert bleibt, was den Änderungsbereich der Belastung an der Stellwelle gegenüber dem System, in dem der Maßstabkoeffizient sich je nach der Belastung ändert, etwas erweitert. Der Änderungsbereich der Belastung an der Stellwelle erlaubt es jedoch nicht, das angegebene System in Master-Slave-Manipulatoren zu verwenden, die für den Einsatz unter extremalen Bedingungen bestimmt sind. Außerdem setzt die Abhängigkeit der Verstimmung der Wellen der Führungs- und der Stellsynchronmaschine von den Drehmomenten, die vom Operateur und durch die Belastung erzeugt werden, die Genauigkeit der Fernübertragung des Winkels herab.

## Offenbarung der Erfindung

Der Erfindung liegt die Aufgabe zugrunde, ein System der Drehwinkel- und Kraft-Fernübertragung zwischen der Führungs- und der Stellwelle mit einer solchen Sollwertvorgabeeinrichtung der Amplitude von Ständermagnetfeldern der Führungs- und der Stellsynchronmaschine zu schaffen, die es ermöglicht, den Maßstabkoeffizienten der auf die Welle der Führungssynchronmaschine rückgeführten Kraft während der Arbeit des Fernübertragungssystems zu ändern.

Die gestellte Aufgabe wird dadurch gelöst, daß im System der Drehwinkel- und Kraft-Fernübertragung zwischen der Führungs- und der Stellwelle, das eine Führungs- und eine Stellsynchronmaschine enthält, deren Wellen mit der Führungs- bzw. Stellwelle gekoppelt sind und Positionsgeber besitzen, die elektrisch mit Eingängen einer Sollwertvorgabeeinheit der Orientierung der Ständermagnetfelder der Führungs- und der Stellsynchronmaschine sowie mit Informationseingängen einer Sollwertvorgabeeinrichtung der Amplitude der Ständermagnetfelder der Führungs- und der Stellsynchronmaschine verbunden sind, deren Ausgang elektrisch mit dem Steuereingang der Formierungseinheit des Strom in Wicklungen der Führungs- und der Stellsynchronmaschine verbunden ist, und an deren Sollwertvorgabeeingang der Ausgang der Sollwertvorgabeeinheit der Orientierung von Ständermagnetfeldern der Führungs- und der Stellsynchronmaschine geschaltet ist, während deren Eingänge an die elektrisch miteinander verbundenen, entsprechenden Wicklungen der Führungs- und der Stellsynchronmaschine angeschlossen sind, erfindungsgemäß die Sollwertvorgabeeinrichtung der Amplitude der Ständermagnetfelder der Führungs- und der Stellsynchronmaschine eine Einheit zur Erfassung der vorgegebenen Verstimmung der Wellen der Führungs- und der Stellsynchronmaschine enthält, die einen Sollwertvorgabeeingang, dem ein Signal zugeführt wird, welches dem Maßstabkoeffizienten der auf die Welle der Führungssynchronmaschine rückgeführten Kraft entspricht, und Informationseingänge, die als Informationseingänge der Sollwertvorgabeeinrichtung der Amplitude der Ständermagnetfelder der Führungs- und der Stellsynchronmaschine dienen, sowie eine Vergleichseinheit besitzt, deren Informationseingänge an die Informationseingänge der Einheit zur Erfassung der vorgegebenen Verstimmung der Wellen der Führungs- und der Stellsynchronmaschine und deren Sollwertvorgabeeingang an den Ausgang der Einheit zur Erfassung der vorgegebenen Verstimmung der Wellen der Führungs- und der Stellsynchronmaschine angeschlossen sind, während deren Ausgang als Ausgang der Sollwertvorgabeeinrichtung der Amplitude der Ständermagnetfelder der Führungs- und der Stellsynchronmaschine dient.

Es ist zweckmäßig, das Fernübertragungssystem mit einer Korrektureinheit auszustatten, deren Eingang an den Ausgang der Sollwertvorgabeeinrichtung der Amplitude der Ständermagnetfelder der Führungs- und der Stellsynchronmaschine angeschlossen ist, und deren Ausgang mit dem Steuereingang der Formierungseinheit des Stroms in den Wicklungen der Führungs- und der Stellsynchronmaschine in Verbindung steht.

Es ist vorteilhaft, das Fernübertragungssystem mit einem Umschalter, dessen Informationseingänge an die Positionsgeber der Wellen der Führungs- und der Stellsynchronmaschine angeschlossen sind, und einer Schaltung zur Ermittlung der Polarität des Verstimmungssignals zu versehen, bei der der eine Eingang an den Sollwertvorgabeeingang der Einheit zur Erfassung der vorgegebenen Verstimmung der Wellen der Führungs- und der Stellsynchronmaschine angeschlossen ist, dem anderen Eingang ein Signal zugeführt wird, das dem Verhältnis der Anlaufdrehmomente der Führungs- und der Stellsynchronmaschine entspricht, und der Ausgang an den Steuereingang des Umschalters angeschlossen ist, dessen Ausgänge an die Eingänge der Sollwertvorgabeeinheit der Orientierung der Ständermagnetfelder der Führungs- und der Stellsynchronmaschine und an die Informationseingänge der Sollwertvorgabeeinrichtung der Amplitude der Ständermagnetfelder der Führungs- und der Stellsynchronmaschine angeschlossen sind.

Es ist ferner vorteilhaft, daß die Sollwertvorgabeeinheit der Orientierung der Ständermagnetfelder der Führungs- und der Stellsynchronmaschine im Fernübertragungssystem einen Reihenkreis aus der Schaltung zur Ermittlung der Polarität des Verstimmungssignals der Wellen der Führungs- und der Stellsynchronmaschine, deren Einggänge als Eingänge der Sollwertvorgabeeinheit der Orieniterung der Ständermagnetfelder der Führungs- und der Stellsynchronmaschine dienen, einem Vervielfacher, der einen Sollwertvorgabeeingang aufweist, dem ein Signal zugeführt wird, das dem Winkel zwischen den Magnetfeldern des Läufers und des Ständers der Führungs- oder der Stellsynchronmaschine entspricht, und einem Addierer enthält, bei dem der eine Eingang an den Ausgang des Vervielfachers angeschlossen ist, der andere Eingang mit einem der Eingänge der Schaltung zur Ermittlung der Polarität des Verstimmungssignals der Wellen der Führungs- und der Stellsynchronmaschine verbunden ist, und der Ausgang als der Ausgang der Sollwertvorgabeeinheit der Orientierung der Ständermagnetfelder der Führungs- und der Stellsynchronmaschine dient.

Zweckmäßig ist es ebenfalls, daß die Einheit zur Ermittlung der vorgegebenen Verstimmung der Wellen der Führungs- und Stellsynchronmaschine im Fernübertragungssystem einen Umsetzer des Kraftmaßstabkoeffizienten in

einem Winkel zwischen den Magnetfeldern des Läufers und des Ständers der Führungs- oder der Stellsynchronmaschine, einen Vervielfacher, dessen erster Eingang elektrisch mit dem Ausgang des Umsetzers des Kraftmaßstabkoeffizienten in den Winkel zwischen den Magnetfeldern des Läufers und des Ständers der Führungs- oder Stellsynchronmaschine verbunden ist, eine Schaltung zur Ermittlung der Polarität des Verstimmungssignals der Wellen der Führungs- und der Stellsynchronmaschine, deren Ausgang an den zweiten Eingang des Vervielfachers angeschlossen ist, und einen Addierer enthält, dessen einer Eingang an den Ausgang des Vervielfachers und dessen anderer Eingang an einen der Eingänge der Schaltung zur Ermittlung der Polarität des Verstimmungssignals der Wellen der Führungs- und der Stellsynchronmaschine, die gleichzeitig als Informationseingänge der Einheit zur Ermittlung der vorgegebenen Verstimmung der Wellen der Führungs- und der Stellsynchronmaschine dienen, angeschlossen sind und der Ausgang der Einheit zur Ermittlung der vorgegebenen Verstimmung der Wellen der Führungs- und der Stellsynchronmaschine dient.

Es ist ebenfalls zweckmäßig, daß die Einheit zur Ermittlung der vorgegebenen Verstimmung der Wellen der Führungs- und der Stellsynchronmaschine im Fernübertragungssystem zusätzlich einen Addierer enthält, dessen einer Eingang an den Ausgang des Umsetzers des Kraftmaßstabkoeffizienten in den Winkel zwischen den Magnetfeldern des Läufers und des Ständers der Führungs- oder der Stellsynchronmaschine angeschlossen ist, dem anderen Eingang ein Signal zugeführt wird, das dem Drehwinkel des Ständermagnetfeldes der Führungs- oder Stellsynchronmaschine um 90° entspricht, und dessen Ausgang an den ersten Eingang des Vervielfachers geschaltet ist.

Es ist ratsam, daß die Korrektureinheit im Fernübertragungssystem einen Integrator, eine Schaltung zur Ermittlung des Signalmoduls, deren Eingang am Ausgang des Integrators liegt, einen Vervielfacher, dessen erster Eingang an den Ausgang der Schaltung zur Ermittlung des Signalmoduls angeschlossen ist, und dessen zweiten Eingang ein Signal zugeführt wird, das der Polarität des Verstimmungssignals der Wellen der Führungs- und der Stellsynchronmaschine entspricht, und eine Vergleichsschaltung enthält, bei der der erste Eingang an den Ausgang des Vervielfachers angeschlossen ist, der zweite Eingang mit dem Eingang des Integrators in Verbindung steht und der Verbindungspunkt als Eingang der Korrektureinheit dient, während der Ausgang der Vergleichsschaltung den Ausgang der Korrektureinheit darstellt.

Es ist vorteilhaft, den zweiten Eingang des Vervielfachers der Korrektureinheit im Fernübertragungssystem an den Ausgang der Schaltung zur Ermittlung der Polarität des Verstimmungssignals der Wellen der Führungs- und der Stellsynchronmaschine der Sollwertvorgabeeinheit der Orientierung der Ständermagnetfelder der Führungs- und der Stellsynchronmaschine anzuschließen.

Es ist sinnvoll, den zweiten Eingang des Vervielfachers der Korrektureinheit im Fernübertragungssystem an den Ausgang der Schaltung zur Ermittlung der Polarität des Verstimmungssignals der Wellen der Führungs- und der Stellsynchronmaschine der Einheit zur Ermittlung der Vvorgegebenen Verstimmung der Wellen der Führungs- und der Stellsynchronmaschine anzuschließen.

Das System der Drehwinkel- und Kraft-Fernübertragung zwischen der Führungs- und der Stellwelle ermöglicht eine Änderung des Maßstabkoeffizienten der auf die Führungswelle rückgeführten Kräfte, wodurch der Änderungsbereich der Belastung an der Stellwelle erweitert wird, in dem die Funktionsfähigkeit des biotechnischen Master-Slave-Manipulatorsystems sichergestellt wird. Im angegebenen Änderungsbereich der Belastung wird die Bedienungsfreundlichkeit des Systems erhöht und dadurch die Ermündung des Operateurs gesenkt. Außerdem erhöht sich die Genauigkeit der Fernübertragung des Winkels und infolgedessen sinkt der Zeitaufwand für die Ausführung einer Ope-

- 10 -

rationen und erweitert sich die Klasse der Aufgaben, zu deren Ausführung das System eingesetzt werden kann.

Kurzbeschreibung der Zeichnungen

Im folgenden wird die Erfindung an konkreten Ausführungsbeispielen anhand der beigelegten Zeichnungen näher erläutert. Es zeigen:

Fig. 1 - funktionelles Blockschaltbild des erfindungsgemäßen Systems der Drehwinkel - und Kraftübertragung zwischen der Führungs- und der Stellwelle,;

Fig. 2 - dito wie in Fig. 1 mit Korrektureinheit, Umschalter und der Schaltung der Polarität des Verstimmungssignals, nach der Erfindung;

Fig. 3 - dito wie in Fig. 2 mit Funktionsschaltungen der Formierungseinheit des Stroms in den Wicklungen der Führungs- und der Stellsynchronmaschine, der Einheit zur Ermittlung der Verstimmung der Wellen des Führungs- und der Stellsynchronmaschine und der Sollwertvorgabeeinheit der Orientierung der Ständermagnetfelder der Führungs- und der Stellsynchronmaschine, nach der Erfindung;

Fig. 4 - dito wie in Fig. 2 mit Funktionsschaltungen der Sollwertvorgabeeinheit der Orientierung der Ständermagnetfelder der Führungs- und der Stellsynchronmaschine und einer Einheit zur Ermittlung der vorgegebenen Verstimmung der Wellen der Führungs- und der Stellsynchronmaschine und einer für diese Einheiten gemeinsamen Schaltung zur Ermittlung der Polarität des Verstimmungssignals der Wellen der Führungs- und der Stellsynchronmaschine, sowie der Korrektureinheit, nach der Erfindung.

Fig. 5 (a, b, c, d, e, f) - Zeigerdiagramme der Magnetfelder der Ständer und der Läufer der Führungs- und der Stellsynchronmaschine bei verschiedenen Betriebsarten (bei gegensinnig geschalteten Wicklungen der Maschinen);

Fig. 6 (a, b, c, d, e, f) - dito wie in Fig. 5 bei gleichsinnig geschalteten Wicklungen der Führungs- und der Stellsynchronmaschine;

Fig. 7 (a, b, c, d, e, f) - dito wie in Fig. 6 bei der Vorgabe eines Winkels zwischen den Magnetfeldern des Läufers und des Ständers der Führungs- und der Stellsynchronmaschine unter 30°.

Bevorzugte Ausführungsform der Erfindung

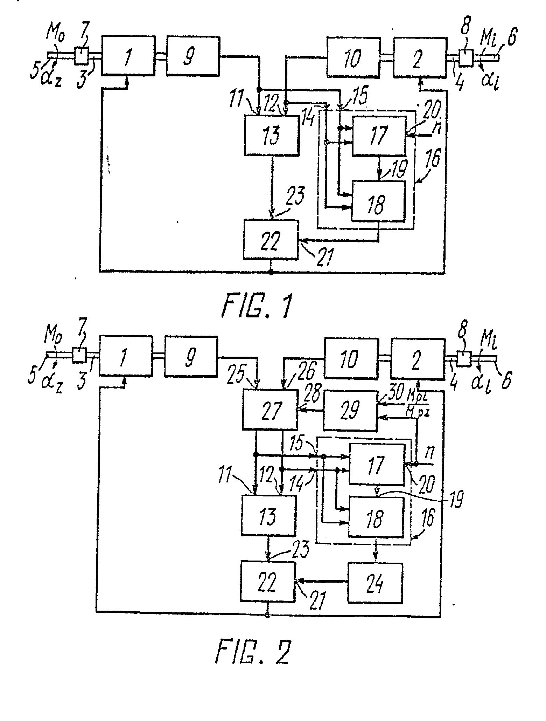

Das System der Drehwinkel - und Kraft-Fernübertragung zwischen der Führungs- und der Stellwerte enthält eine Führungs- und eine Stellsynchronmaschine 1 (Fig. 1), 2, deren Wellen mit einen Führungs- und einer Stellwelle 5 bzw. 6 in der zu beschreibenden Variante über Kupplungen 7, 8 verbunden sind. Zur Verminderung der Drehgeschwindigkeit der Führungs- und der Stellwellen 1, 2 sind ihre Wellen 3, 4 mit der Führungs- und der Stellwelle 5 bzw. 6 über Getriebe verbundenen (in der Zeichnung nicht dargestellt). An den Wellen 3, 4 der Synchronmaschinen 1, 2 sind Positionsgeber 9, 10 angebracht, die elektrisch mit den Eingängen 11, 12 einer Sollwertvorgabeeinheit 13 der Orientierung der Ständermagnetfelder der Führungs- und der Stellsynchronmaschine verbunden. In zu beschreibender Variante sind die Positionsgeber 9, 10 unmittelbar an die Eingänge 11, 12 der Sollwertvorgabeeinheit 13 der Orientierung angeschlossen. Die Ausgänge der Positionsgeber 9, 10 sind ebenfalls an die Informationseingänge 14, 15 einer Sollwertvorgabeeinrichtung 16 der Amplitude der Ständermagnetfelder der Führungs- und der Stellsynchronmaschine angeschlossen, als welche die miteinander verbundenen entsprechenden Informationseingänge einer Einheit 17 der Ermittlung der vorgegebenen Verstimmung der Wellen der Führungs- und der Stellsynchronmaschine und einer Vergleichseinheit 18 dienen, deren Sollwertvorgabeeingang 19 an den Ausgang der Einheit 17 der Ermittlung der vorgegebenen Verstimmung der Wellen angeschlossen ist. Die Einheit 17 der Ermittlung der vorgegebenen Verstimmung der Wellen hat einen Sollwertvorgabeeingang 20, dem ein Signal zugeführt wird, das dem

Maßstabkoeffizienten n der auf die Welle 3 der Führungssynchronmaschine 1 rückgeführten Kraft entspricht. Der Ausgang der Vergleichseinheit 18, der als Ausgang der Einrichtung 16 der Amplitudenvorgabe der Ständermagnetfelder dient, ist elektrisch mit dem Steuereingang 21 einer Formierungseinheit 22 des Stroms in den Wicklungen der Führungs- und der Stellsynchronmaschine verbunden, an deren Sollwertvorgabeeingang 23 der Ausgang der Sollwertvorgabeeinheit 13 der Orientierung der Ständermagnatfelder angeschlossen ist. In der zu beschreibenden Variante ist der Ausgang der Vergleichseinheit 18 unmittelbar an den Steuereingang 21 der Formierungseinheit 22 des Stroms in den Wicklungen angeschlossen. Die Ausgänge der Formierungseinheit 22 des Stroms, deren Anzahl gleich der Wicklungszahl jeder der Synchronmaschinen 1, 2. ist, sind an die Wicklungen der Synchronmaschinen 1, 2 angeschlossen, wobei die entsprechenden Wicklungen der Synchronmaschinen 1, 2 elektrisch miteinander verbunden sind. Da die Wicklungszahl der Synchronmaschine 1 gleich dieser der Synchronmaschine 2 ist, während diese Zahl bei verschiedenen Typen von Synchronmaschinen verschieden sein kann, sind die Wicklungen selbst in Fig. 1 nicht dargestellt, und die Verbindung der Formierungseinheit 22 des Stroms mit den Wicklungen sowie die elektrische Verbindung unter den Wicklungen schematisch durch eine Linie angedeutet sind.

Zur Erhöhung der Genauigkeit der Drehwinkel- und Kraftübertragung zwischen der Führungs- und der Stellwelle 5 bzw. 6 ist der Ausgang der Vergleichseinheit 18 an den Eingang einer Korrektureinheit 24 (Fig. 2) angeschlossen, deren Ausgang seinerseits an den Steuereingang 21 der Formierungseinheit 22 des Stroms in den Wicklungen geschaltet ist. Die Ausgänge der Positionsgeber 9, 10 sind an die Informationseingänge 25, 26 eines Umschalters 27 angeschlossen, an dessen Steuereingang 28 der Ausgang einer Schaltung 29 zur Ermittlung der Polarität des Verstimmungssignals geschaltet ist, bei der

- 13 -

der eine Eingang an den Sollwertvorgabeeinheit 20 der Einheit 17 der Ermittlung der Verstimmung der Wellen angeschlossen ist, während dem Eingang 30 ein Signal zugeführt wird, das dem Verhältnis $\frac{M_{pi}}{M_{pz}}$ der Anlaufmomente der Führungs- und der Stellsynchronmaschine 1 bzw. 2 entspricht.

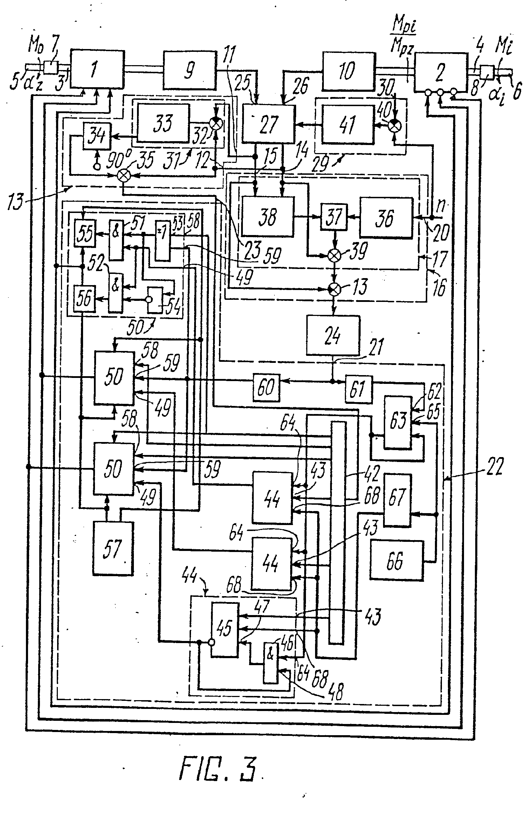

Die Sollwertvorgabeeinheit 13 der Orientierung der Ständermagnetfelder enthält eine Schaltung 31 (Fig. 3) zur Ermittlung der Polarität des Verstimmungssignals der Wellen der Führungs- und der Stellsynchronmaschine, die in der zu beschreibenden Variante mit einem Vergleichselement 32, dessen Eingänge als Eingänge 11, 12 der Sollwertvorgabeeinheit 13 der Orientierung dienen, und einem Relaiselement 33 aufgebaut, dessen Eingang an den Ausgang des Vergleichselementes 32 angeschlossen ist. Das Relaiselement 33 ist so ausgeführt, daß beim Eintreffen eines positiv gepolten Signals an seinem Eingang sein Ausgangssignal "-1" entspricht, und bei einem negativ gepolten Eingangssignal sein Ausgangssignal "+1" beträgt. Der Ausgang der Schaltung 31 zur Ermittlung der Polarität des Verstimmungssignals, als welches das Ausgangssignal des Relaiselementes 33 dient, ist an einen der Eingänge eines Vervielfachers 34 angeschlossen, an dessen Sollwertvorgabeeingang ein Signal eingespeist wird, das dem Winkel zwischen den Magnetfeldern des Läufers und des Ständers der Führungs- 1 oder der Stellsynchronmaschine 2 entspricht, der in der vorliegenden Variante 90° beträgt. Der Ausgang des Vervielfachers 34 ist an einen der Eingänge eines Addierers 35 angeschlossen, dessen anderer Eingang an einen der Eingänge der Schaltung 31 zur Ermittlung der Polarität - des Vergleichselementes 32 - angeschlossen ist, und der Ausgang als Ausgang der Sollwertvorgabeeinheit 13 der Orientierung der Ständermagnetfelder dient.

Die Einheit 17 der Ermittlung der vorgegebenen Verstimmung der Wellen enthält einen Umsetzer 36 des Maßstabkoeffizienten der Kraft in einen Winkel zwischen den Magnetfeldern des Läufers und des Ständers der Führungs- oder Stellsynchronmaschine, dessen Eingang als der Sollwertvorgabeeingang 20 der Einheit I7 der Ermittlung der vorgegebenen Verstimmung der Wellen dient, während der Ausgang elektrisch mit einem der Eingänge eines Vervielfachers 37 verbunden und in der zu beschreibenden Variante unmittelbar an diesen angeschlossen ist. An den anderen Eingang des Vervielfachers 37 ist der Ausgang einer Schaltung 38 der Ermittlung der Polarität des Verstimmungssignals der Wellen der Führungs- und der Stellsynchronmaschine angeschlossen, deren Eingänge als Informationseingänge der Einheit I7 der Ermittlung der vorgegebenen Verstimmung des Wellen dienen. Die Schaltung 38 der Ermittlung der Polarität des Verstimmungssignals der Wellen ist analog zu der Schaltung 3I ausgeführt. Der Ausgang des Vervielfachers 37 ist an einen der Eingänge eines Addierers 39 angeschlossen, an dessen anderen Eingang einer der Eingänge der Schaltung 38 der Ermittlung der Polarität des Verstimmungssignals der Wellen angeschaltet ist. In der zu beschreibenden Variante ist an den Eingang eines Addierers 39 der Eingang der Schaltung 38 der Ermittlung der Polarität angeschlossen, der als Informationseingang I4 der Sollwertvorgangeinrichtung I6 der Amplitude der Ständermagnetfelder dient. Der Ausgang des Addierers 39 dient als Ausgang der Einheit I7 der Ermittlung der vorgegebenen Verstimmung. Bei der angegebenen Struktur der Einheit I7 der Ermittlung der vorgegebenen Verstimmung ist die Vergleichseinheit I8 aus einem Vergleichselement aufgebaut, dessen einer Eingang in der zu beschreibenden Variante an den Eingang der Schaltung 38 der Ermittlung der Polarität des Verstimmungssignals der Wellen angeschlossen ist, der als Informationseingang I5 der Sollwertvorgabeeinrichtung I6 der Amplitude der Ständermagnetfelder dient.

Die Schaltung 29 der Ermittlung der Polarität des Verstimmungssignals ist analog zu den Schaltungen 3I, 38 ausgebildet und enthält eine Reihenschaltung aus einem Vergleichselement 40 und einem Relaiselement 4I.

Die Struktur der Einheit I7 der Ermittlung der vorgegebenen Verstimmung wird durch die Art der Verbindung der entsprechenden Wicklungen der Führungs- und der Stellsynchronmaschine I, 2 bestimmt. In der beschriebenen Variante sind die entsprechenden Wicklungen der Synchronmaschinen I, 2 gegensinnig geschaltet, wie es in Fig. 3 schematisch gezeigt ist, wobei diese Verbindung sowohl parallel als auch seriell sein kann. Ausserdem, wie es aus Fig. 3 ersichtlich ist, sind im System Drehstrom-Synchronmaschinen I, 2 angewendet, d.h. solche mit drei Wicklungen. Dabei ist die in Fig. 3 gezeigte Struktur der Formierungseinheit 22 des Stroms in den Wicklungen dadurch bedingt, dass an ihren Steuer- und Sollwertvorgabeeingang 2I bzw. 23 die Information über die Amplitude und die Orientierung der Ständermagnetfelder der Synchronmaschinen I, 2 als Kodes eintrifft.

Als der Sollwertvorgabeeingang 23 der Formierungseinheit 22 des Stroms in der Wicklungen dient ein Adresseingang eines Festwertspeichers 42 mit in diesem abgelegten Kodes der Dauern und Polarität der Stromversorgungsimpulse der Wicklungen der Synchronmaschinen I, 2. Der Ausgabebus des Festwertspeichers 42 ist an die Steuereingänge 43 der Umsetzer 44 des Kodes in Impulsdauer angeschlossen, deren Zahl der Zahl der Wicklungen jeder Synchronmaschine I, 2 gleich ist. Jeder Umsetzer 44 enthält in der zu beschreibenden Variante einen Rückwärtszähler 45, dessen Setzeingang als Steuereingang 43 des Umsetzers 44 dient, und ein Zweieingangs-UND-Glied 46, dessen Ausgang am Subtraktionseingang 47 des Rückwärtszählers 45 liegt. Der invertierende Borgenausgang des Rückwärtszählers 45 ist an den Eingang 48 des UND-Gliedes 46 angeschlossen und dient als Ausgang des Umsetzers 44. Zur Vereinfachung der Struktur der Formierungseinheit 22 des Stroms in der Wicklungen ist in Fig. 3 das Prinzipschaltbild nur eines Umsetzers 44 dargestellt.

Die Ausgänge sämtlicher Umsetzer 44 sind an die Sollwertvorgabeeingänge 49 der Impulsdauer der Umschalter 50

- 16 -

angeschlossen, deren Zahl gleich der Zahl der Wicklungen jeder Synchronmaschine I, 2 ist. Jeder Umschalter 50 enthält in der zu beschreibenden Variante zwei Zweieingangs-UND-Glieder 5I, 52, deren erste Eingänge vereinigt sind und als Eingang 49 des Umschalters 50 dienen. Der zweite Eingang des UND-Gliedes 5I ist an den Ausgang eines Exklusiv-ODER-Gliedes 53 angeschaltet, das auch an den Eingang 54 angeschlossen ist. Der Ausgang des letzteren ist an den zweiten Eingang des UND-Gliedes 52 angeschlossen. Die Ausgänge der UND-Glieder 5I, 52 sind an die Steuereingänge der Schalter 55, 56 angeschlossen, deren Leistungseingänge an die Spannungsquelle 57 angeschaltet sind, während ihre Ausgänge zusammengeschaltet sind und als Ausgang des Umschalters 50 dienen, welcher, wie es oben angegebenen wurde, an entsprechende Wicklungen der Führungs- und der Stellsynchronmaschine I, 2 angeschlossen ist.

Der erste Eingang des Exklusiv-ODER-Gliedes 53 dient als Sollwertvorgabeeingang 58 der Polarität der Impulse des Umschalters 50 und ist an den entsprechenden Ausgang des Festwertspeichers 42 angeschlossen, während der zweite Eingang als Sollwertvorgabeeingang 59 dient, der an den Ausgang der Schaltung 60 zur Ermittlung der Polarität des Steuersignals angeschlossen ist, deren Eingang an den Eingang der Schaltung 6I der Ermittlung des Moduls des Steuersignals angeschaltet ist. Dabei dienen die vereinigten Eingänge der Schaltungen 60, 6I als Steuereingang 2I der Formierungseinheit 22 des Stroms in den Wicklungen. Die Eingänge 59 sämtlicher Umschalter 50 sind zusammengeschaltet. Zur Vereinfachung der Struktur der Formierungseinheit 22 des Stroms in den Wicklungen ist in Fig. 3 das Prinzipschaltbild nur eines Umschalters 50 dargestellt.

Der Ausgang der Schaltung 6I der Ermittlung des Moduls des Steuersignals ist an den Setzeingang 62 eines Rückwärtszählers 63 angeschlossen, dessen Borgenausgang an den Schreibeingang und an die Frequenzvorgabeeingänge 64 der Impulse der Umsetzer 44 des Kodes in Impulsdauer angeschlossen ist. Als Ausgang 64 dient der zweite Eingang des UND-Gliedes 46. An den Subtraktionseingang 65 des Rückwärtszählers 63 ist der Ausgang eines Haupttaktgebers 66 geschaltet, der auch an den Eingang eines Frequenzuntersetzers 67 angeschlossen ist. Der Ausgang des Frequenzuntersetzers 67 ist an die Schreibeingänge 68 der Umsetzer 44 des Kodes in Impulsdauer angeschlossen.

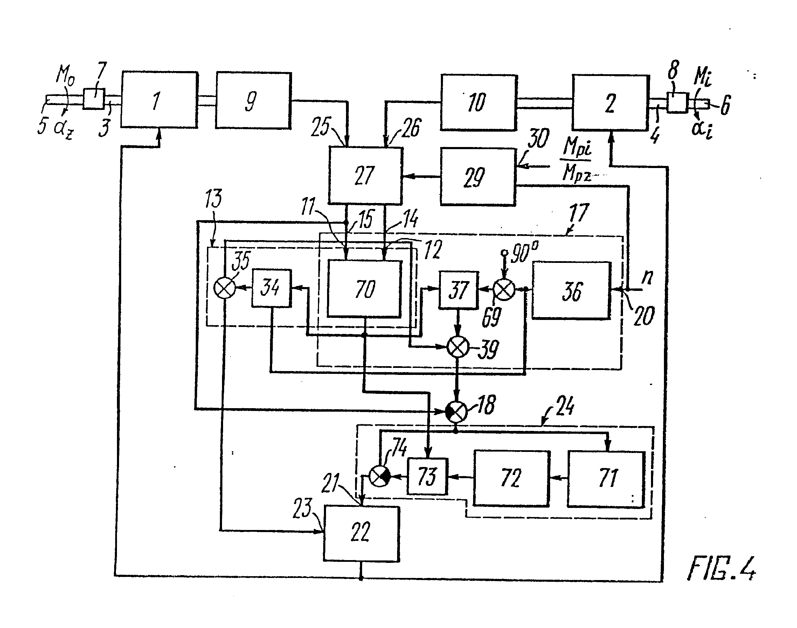

Beim gleichsinnigen Anschluss der entsprechenden Wicklungen der Führungs- und der Stellsynchronmaschine I bzw. 2, wobei dieser sowohl seriell als auch parallel sein kann, enthält die Einheit I7 der Ermittlung der vorgegebenen Verstimmung einen Addierer 69 (Fig. 4), bei dem der eine Eingang an den Ausgang des Umsetzers 36 des Masstabkoeffizienten der Kraft in den Winkel zwischen den Magnetfeldern des Läufers und des Ständers der Führungs- und der Stellsynchronmaschine angeschlossen ist, dem zweiten Eingang ein Signal zugeführt wird, das dem Drehwinkel des Magnetfeldes des Ständers der Führungs- I oder der Stellsynchronmaschine 2 um 90° entspricht, während der Ausgang an den Eingang des Vervielfachers 37 angeschlossen ist.

Zur Vereinfachung der Struktur des Systems der Drehwinkel- und Kraft-Fernübertragung enthalten die Sollwertvorgabeeinheit I3 der Orientierung der Ständermagnetfelder und die Einheit I7 der Ermittlung der vorgegebenen Verstimmung der Wellen eine gemeinsame Schaltung 7 zur Ermittlung der Polarität des Verstimmungssignals der Wellen der Führungs- und der Stellsynchronmaschine, die analog den Schaltungen 3I (Fig. 3), 38 zur Ermittlung der Polarität aufgebaut ist.

In der in Fig. 4 dargestellten Variante des Fernübertragungssystems ist der Ausgang des Umsetzers 36 des Masstabkoeffizienten der Kraft an den oben angegebenen Sollwertvorgabeeingang des Vervielfachers 34 angeschlossen.

Die Korrektureinheit 24 (Fig. 4) enthält einen Integrator 7I, dessen Ausgang an den Eingang einer Schaltung 72 der Ermittlung des Signalmoduls angeschlossen ist, deren Ausgang seinerseits an den ersten Eingang eines Vervielfachers 73 geschaltet ist, an dessen zweiten Eingang ein Signal eingespeist wird, das der Polarität des Ver- stimmungssignals der Wellen 3, 4 der Führungs- und der Stellsynchronmaschine I, 2 entspricht. In der beschriebenen Variante ist an den zweiten Eingang des Vervielfachers 73 der Ausgang der Schaltung 70 der Ermittlung der Polarität des Verstimmungssignals angeschlossen. Der Ausgang des Vervielfachers 73 ist an den ersten Eingang einer Vergleichsschaltung 74 angeschlossen, deren zweiter Eingang mit dem Eingang des Integrators 7I verbunden ist, wobei der Verbindungspunkt als Eingang der Korrektureinheit 24 dient. Der Ausgang der Vergleichsschaltung 74 dient als Ausgang der Korrektureinheit 24.

Es sind Varianten möglich, bei welchen der zweite Eingang des Vervielfachers 73 entweder an den Ausgang der Schaltung 3I (Fig. 3) der Ermittlung der Polarität des Verstimmungssignals oder an den Ausgang der Schaltung 38 der Ermittlung der Polarität des Verstimmungssignals angeschlossen ist (diese Verbindungen sind in der Zeichnung nicht abgebildet).

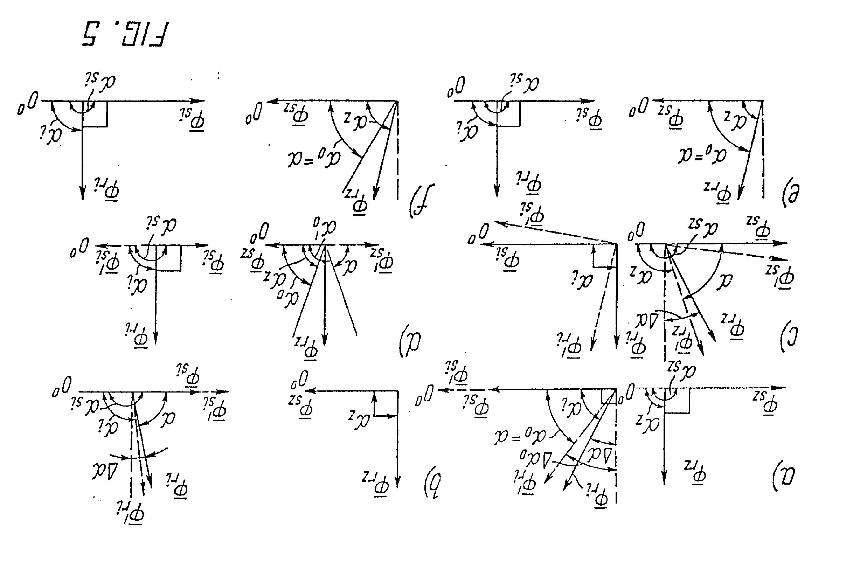

Zur besseren Verständigung der Arbeit des Systems der Drehwinkel- und Kraft-Fernübertragung zwischen der Führungs- und der Stellwelle sind in Fig. 5, 6 und 7 Zeigerdiagramme a, b, c, d, e, f der Magnetfelder $\phi_{rz}$, $\phi_{ri}$ der Läufer der Führungs- bzw. der Stellsynchronmaschine und $\phi_{sz}$, $\phi_{si}$ der Ständer der Führungs- bzw. Stellsynchronmaschine bei verschiedenen Betriebsarten des Systems der Fernübertragung dargestellt.

Das System der Drehwinkel- und Kraft-Fernübertragung zwischen der Führungs- und der Stellwelle funktioniert folgenderweise. Der Operateur gibt einen bestimmten, ihm für die Arbeit erforderlichen Masstabkoeffizienten n der Kraft vor, der einer Grösse gleich ist, die zum Verhältnis des vom Operateur an die Führungswelle 5 (Fig. I) angelegten Momentes $M_o$ zum Moment $M_i$ reziprok ist, das belastungsseitig an der Stellwelle 6 angreift. Dabei gibt die Sollwertvorgabeeinheit I3 der Orientierung der Ständermagnetfelder der Führungs- und der Stellsynchronmaschine nach den Signalen der Positionsgeber 9, IO eine solche Orien-

tierung der Magnetfelder $\bar{\bar{\Phi}}_{sz}$, $\bar{\Phi}_{si}$ der Ständer der Führungs- und der Stellsynchronmaschine I bzw. 2 vor, dass der Winkel zwischen einem der Magnetfelder $\bar{\Phi}_{rz}$, $\bar{\Phi}_{ri}$ der Läufer und dem zugehörigen Magnetfeld $\bar{\bar{\Phi}}_{sz}$ oder $\bar{\bar{\Phi}}_{si}$ des Ständers bei gleichbleibender Grösse n konstant bleibt (bzw. sich in einem Bereich ändert, der durch das Vorhandensein einer elektromagnetischen Zeitkonstante bei Synchronmaschinen I, 2 bedingt ist). Dieses ist z.B. dadurch realisierbar, dass man in Wicklungen der Synchronmaschinen I, 2 Spannungen erzeugt, deren Vektorsumme einen betragsmässig konstanten Winkel mit $\bar{\Phi}_{rz}$ oder $\bar{\Phi}_{ri}$ bildet. Dieser Winkel kann beispielsweise gleich 90° vorgegeben werden. Sind die Ständerwicklungen der Synchronmaschinen z.B. parallel und gegensinnig geschaltet, so sind die Varianten der gegenseitigen Orientierung der Magnetfelder der Läufer und der Ständer der Synchronmaschinen I, 2 in Fig. 5 (a, b, c, d, e, f) dargestellt. Für die Drehmomente der Führungs- und der Stellsynchronmaschine I, bzw. 2, die wir mit $M_I$ bzw. $M_2$ bezeichnen, kann man folgende Ausdrücke

$$\begin{cases} M_I = K_I \cdot \Phi_{rz} \cdot \Phi_{sz} \cdot \sin(\bar{\Phi}_{rz}, \bar{\Phi}_{sz}) & (I) \\ M_2 = K_2 \cdot \Phi_{ri} \cdot \Phi_{si} \cdot \sin(\bar{\Phi}_{ri}, \bar{\Phi}_{si}) \end{cases}$$

schreiben, worin $K_I$, $K_2$ Faktoren sind, die durch die Konstruktion der Synchronmaschinen I, 2 bedingt sind, insbesondere durch die Form des Läufers und des Ständers, die Grösse des Luftspaltes zwischen ihnen, die Abmessungen der Synchronmaschine. Nimmt man die Amplitude der Magnetfelder $\Phi_{rz}$, $\Phi_{ri}$ der Läufer als Konstant an, und das Verhältnis der Magnetfelder $\Phi_{sz}$, $\Phi_{si}$ der Ständer ist konstant, was bei Nulldrehgeschwindigkeiten der Wellen 3, 4 der Synchronmaschinen I, 2 der Fall ist, so kann man, wie es aus (I) hervorgeht, durch eine Änderung der Winkel zwischen den Magnetfeldern der Läufer und der Ständer der Synchronmaschinen I, 2 beliebige Verhältnisse von $M_2$ zu $M_I$ erhalten, die bei der Vernachlässigung von die Bewegung der Wellen 3, 4 bremsenden Momenten, die z.B. in Kupplungen 7, 8 entstehen, gleich dem Kraftmasstabkoeffizienten n sind. Das Aufrechterhalten des erforderlichen Verhältnisses von sin-Werten der Winkel zwischen den Magnetfeldern der Läufer und Ständer der Führungs- und der Stellsynchronmaschine I bzw. 2 wird durch die Sollwertvorgabeeinrichtung I6 der Amplitude der Ständermagnetfelder der Führungs- und der Stellsynchronmaschine ausgeführt. Dabei berechnet die Einheit I7 der Ermittlung der vorgegebenen Verstimmung der Wellen der Führungs- und der Stellsynchronmaschine unter Berücksichtigung des Koeffizienten n und der laufenden Werte der Drehwinkel $\alpha_z$, $\alpha_i$ der Führungs- bzw. der Stellmaschine I bzw. 2 die vorgegebene Verstimmung der Wellen 3, 4 der Synchronmaschinen I bzw. 2, bei dem das Verhältnis von $M_i$ zu $M_o$ gleich n ist. Die Vergleichseinheit I8, an deren Sollwertvorgabeeingang I9 ein der vorgegebenen Verstimmung der Wellen 3, 4 entsprechendes Signals eintrifft, vergleicht dieses mit einem Signal, das dem Signal der laufenden Differenz ($\alpha_z - \alpha_i$) entspricht, und das resultierende Differenzsignal gelangt an den Steuereingang 2I der Formierungseinheit 22 des Stroms in den Wicklungen der Führungs- und der Stellsynchronmaschine. Dadurch werden $\varphi_{sz}$ und $\varphi_{si}$ so geändert, dass das Verhältnis $\dfrac{M_i}{M_o}$ dem Wert des Masstabkoeffizienten n der Kraft angeglichen wird. Auf diese Weise wird dank der Wechselwirkung der Sollwertvorgabeeinheit I3 der Orientierung der Magnetfelder und der Sollwertvorgabeeinrichtung I6 der Amplitude der Magnetfelder die bidirektionale Fernübertragung des Drehwinkels (Verstellung) und der Kraft zwischen der Führungs- und der Stellwelle 5 bzw. 6 ausgeführt. $\varphi_{sz}$, $\varphi_{si}$ rotieren ja dabei mit gleichen Geschwindigkeiten und bei einer Vergrösserung der Winkel ($\overline{\varphi}_{rz}, \frown \overline{\varphi}_{sz}$) oder ($\overline{\varphi}_{ri}, \frown \overline{\varphi}_{si}$) von 0 bis auf 90° steigen $M_I$ und $M_2$ laut (I) an.

Zur Erhöhung der Genauigkeit der Fernübertragung des Drehwinkels und der Kraft ist in das System die Korrektureinheit 24 (Fig. 2) eingefügt. Als deren Eingangssignal dient ein Signal, das einer am Ausgang der Vergleichseinheit I8 vorhandenen Abweichung des laufenden Wertes der Verstimmung der Wellen 3, 4 vom Sollwert entspricht. Im beschriebenen System ist die Korrektureinheit 24 so aufgebaut, dass das Gleichgewicht nur dann eintritt, wenn das Ausgangssignal der Vergleichseinheit I8 gleich Null wird, d.h. bei einer solchen gegenseitigen Orientierung von $\overline{\Phi}_{rz}$, $\overline{\Phi}_{sz}$ und $\overline{\Phi}_{ri}$, $\overline{\Phi}_{si}$, wenn die Bezeihung

$$n = \frac{M_i}{M_o} \qquad (2)$$

erfüllt ist.

Die einfachsten Ausführungsvarianten der Korrektureinheit 24 sind Ausführungsvarianten auf der Basis eines Integrators und eines Relais, die es ermöglichen, Störungen verschiedener Art auszugleichen.

Schreiben wir das Verhältnis von $M_2$ zu $M_I$ aus (I) auf:

$$n' = \frac{M_2}{M_I} = \frac{K_2 \cdot \Phi_{ri}}{K_I \cdot \Phi_{rz}} \cdot \frac{\Phi_{si}}{\Phi_{sz}} \cdot \frac{\sin(\overline{\Phi}_{ri}, \overline{\Phi}_{si})}{\sin(\overline{\Phi}_{rz}, \overline{\Phi}_{sz})} \qquad (3)$$

Setzt man einen der Winkel $(\overline{\Phi}_{ri}, \overline{\Phi}_{si})$ und $(\overline{\Phi}_{rz}, \overline{\Phi}_{sz})$ gleich 90° an, so wird der Wert des Koeffizienten n' im folgenden Bereich liegen

$$0 \leqslant n' \leqslant \frac{K_2}{K_I} \frac{\Phi_{ri}}{\Phi_{rz}} \frac{\Phi_{si}}{\Phi_{sz}} \quad \text{bei } (\overline{\Phi}_{rz}, \overline{\Phi}_{sz}) = 90°$$

$$\frac{K_2}{K_I} \frac{\Phi_{ri}}{\Phi_{rz}} \frac{\Phi_{si}}{\Phi_{sz}} \leqslant n' \leqslant \infty \quad \text{bei } (\Phi_{ri}, \Phi_{sz}) = 90°,$$

worin die Werte $\Phi_{sz}$, $\Phi_{si}$ konstant anzunehmen sind. Da es aus enengetischen Gründen vorteilhaft ist, einen der Winkel zwischen den Magnetfeldem der Läufer und Ständer der Synchronmaschinen I, 2 gleich 90° konstant zu erhalten, so muss man zwecks Erweiterung des Änderungsbereiches des Koeffizienten n' (3), der bei Vernachlässigung des Widerstandes der Bewegung der Führungs- und der Stellwelle 5 bzw. 6 gleich dem Kraftmasstabkoeffizienten n ist, die Führungs- I oder Stellsynchromaschine 2 wählen, in der die Magnetfelder des Läufers und der Ständers

- 22 -

aus der Beziehung (4) zueinander senkrecht stehend einzustellen sind. Die Auswahl der Führungs- I oder der Stellsynchronmaschine 2 führt der Umschalter 27 aus, der durch die Schaltung 29 der Ermittlung der Polarität des Verstimmungssignals angesteuert wird, das durch die Differenz zwischen der am Sollwertvorgabeeingang 20 der Einheit I7 der Ermittlung der vorgegebenen Verstimmung eintreffenden Grösse n und dem Verhältnis $\frac{M_{p1}}{M_{p2}}$ der Anlaufmomente der Synchronmaschinen 2, I bestimmt wird. Dieses Verhältnis beträgt

$$\frac{K_2}{K_I} \frac{\varphi_{ri} \varphi_{si}}{\varphi_{rz} \varphi_{sz}}$$

bei maximalen Werten von $\varphi_{si}$, $\varphi_{sz}$ und bei Nulldrehgeschwindigkeiten der Wellen 3, 4. Bei Parallel - oder Reihenschaltung der Wicklungen, die gleich- oder gegensinnig sein kann und Nulldrehgeschwindigkeiten der Wellen 3, 4 ist das Verhältnis $\frac{\varphi_{si}}{\varphi_{sz}}$ für zwei ausgewählten Synchronmaschinen I, 2 konstant, deshalb ist im realen System der Drehwinkel- und Kraft-Fernübertragung das Auswechseln des Verhältnisses von Amplituden der Magnetfelder in (4) durch das Verhältnis von Anlaufmomenten und die Auswahl der Synchronmaschine I, 2 aus (4), die bei senkrecht zueinander stehenden Magnetfeldern des Läufers und des Ständers laufen soll, möglich. Dabei führt der Umschalter 27 das Zuschalten des Ausganges des Positionsgebers 9 an den Eingang II oder I2 der Sollwertvorgabeeinheit I3 der Orientierung der Magnetfelder und an den Eingang I5 bzw. I4 der Sollwertvorgabeeinrichtung I6 der Amplitude der Magnetfelder aus. Gleichzeitig wird der Ausgang des Positionsgebers IO an den Eingang I2 oder II der Sollwertvorgabeeinheit I3 der Orientierung der Magnetfelder und an den Eingang I4 bzw. I5 der Sollwertvorgabeeinhechtung I6 der Amplitude der Magnetfelder angeschlossen.

Gehen wir auf die Arbeit des Systems der Drehwinkel- und Kraft-Fernübertragung, das in Fig. 2 dargestellt ist, mit Holfe von Zeigerdiagrammen in Fig. 5 bei gegensinnig geschalteten Ständerwicklungen der Synchronmaschinen I, 2 näher ein. Es sei der Kraftmasstabkoeffizient n so vorgegeben, dass das Verhältnis (2) bei $\alpha_1 = \alpha_0$ (Fig.5 a) sich erfüllt. Dabei ist der Winkel ( $\widehat{\phi_{rz}, \phi_{sz}}$ ) gleich 90° (die erste Bedingung aus (4) ist erfüllt). Die Beziehung (3) lässt sich dabei folgenderweise umschreiben:

$$n' = \frac{K_2 \phi_{ri} \phi_{si}}{K_I \phi_{rz} \phi_{sz}} \cdot \sin( \widehat{\overline{\phi}_{ri}, \overline{\phi}_{si}} ) \qquad (5)$$

Bei der Vernachlässigung des Widerstandes und unter der Annahme n'= n ergibt sich aus (5) für den Winkel $\alpha$ zwischen den Magnetfeldern $\overline{\phi}_{ri}$, $\overline{\phi}_{si}$ des Läufers und des Ständers:

$$\alpha = \text{arc } \sin(\frac{n K_1 \phi_{rz} \phi_{sz}}{K_2 \phi_{ri} \phi_{si}} ) \qquad (6)$$

Somit ist die vorgegebene Verstimmung $\Delta d_0$ gleich (90 - $\alpha$), die reale Verstimmung beträgt ($\alpha_z - \alpha_1$) und am Ausgang der Vergleichseinheit I8 (Fig. 2) tritt ein Differenzsignal (90° - $\alpha$ - $\alpha_z$ + $\alpha_1$) auf. Die zur Sicherstellung der Gleichheit n'= n erforderliche Orientierung von $\overline{\phi}_{ri}$ ist mit $\alpha_0$ bezeichnet. Deshalb steigt die Amplitude von $\phi_{sz}$, $\phi_{si}$ infolge des Vorhandenseins der Korrektureinheit 24 so lange an, bis die Verminderung des Winkels ( $\widehat{\overline{\phi}_{ri}, \overline{\phi}_{si}}$ ) laut (I) zum Einstellen eines neue Gleichgewichtszustandes diesmal schon bei ( $\widehat{\overline{\phi}_{ri}, \overline{\phi}_{si}}$ )= $\alpha$ führt. Dabei wird angenommen, dass $M_i$ konstant ist, dann wird das Gleichgewicht $M_2 = M_I$ bei einem grösseren Wert $\phi'_{si}$ des Ständermagnetfeldes der Stellsynchronmaschine 2 ( $\phi'_{si}$ > $\phi_{si}$) und folglich bei einem grösseren Wert $M_I$ laut (I) erreicht. Auf diese Weise geht die anfangs gestörte (in Fig.5a gezeigt) Beziehung n'> n nach einer Weile in eine Gleichheit n' = n über (der Operateur muss dabei zur Erhaltung der unbeweglichen Lage der Führungswelle 5 (Fig. 2) das von ihm angelegte Moment $M_0$ vergrössern).

Es sei nun angenommen, dass die Magnetfelder $\overline{\phi}_{ri}, \overline{\phi}'_{si}$ der Stellsynchronmaschine 2 die in Fig. 5a gestrichelt gezeichneten Anfangsorientierungen haben. Beim Ansteigen der Belastung an der

- 24 -

Stellwelle 6, d.h. beim Vergrößern von $M_i$, dreht sich die Welle 4 der Stellsynchronmaschine 2 gegen den Uhrzeigersinn, und $\overline{\phi}_{ri}$ wird so orientiert, wie es im denselben Digramm durch ausgezogene Linien angedeutet ist, d.h. der Winkel zwischen den Magnetfeldern des Läufers und des Ständers der Stellsynchronmaschine 2 vergrössert sich von $\measuredangle$ auf $\measuredangle_i$ und somit steigt auch $M_2$ laut (1) an. Nun tritt aber am Ausgang der Vergleichseinheit 18 ein Signal auf, das der Nullverstimmung entspricht, die nach dem oben beschriebenen Übergangsprozeß zum Einstellen des Winkels ( $\overline{\phi}_{ri}, \overline{\phi}_{si}$) gleich $\measuredangle$ führt, aber schon bei größeren Amplituden $\overline{\phi}_{si}$ und somit auch $\overline{\phi}_{sz}$, da die Ständerwicklungen der Synchronmaschinen 1, 2 elektrisch miteinander verbunden sind. Somit führt eine Vergrößerung von $M_i$ zu einer Vergrößerung von $M_1$ und zur Vergrößerung von $M_o$, d.h. die Übertragung der an der Stellwelle 6 auftretenden Kraft auf die Führungswelle 5 hat stattgefunden.

In dem Fall, wenn $M_1$ seine Richtung ändert, wird die Geometrie der Magnetfelder nach einem Übergangsprozeß der in Fig. 5b dargestellten ähnlich. Es sei die Ausgangsgeometrie der Magnetfelder des Läufers und des Ständers der Stellsynchronmaschine 2 mit gestrichelten Linien eingezeichnet (Vektoren $\overline{\phi}'_{ri}, \overline{\phi}'_{si}$). Es sei ferner eine Verminderung von $M_i$ angenommen. Da aber $\overline{\phi}_{si}$ anfangs konstant bleibt, wird $M_2 > M_i$, und folglich dreht sich $\overline{\phi}_{ri}$ gegen Uhrzeigersinn in die Position $\overline{\phi}_{ri}$. Dann aber tritt am Ausgang der Vergleichseinheit 18 aus den oben genannten Gründen ein Verstimmungssignal auf, welches dank dem Vorhandensein der Korrektureinheit 24 zu einer Verminderung von $\phi_{sz}, \phi_{si}$ und somit zur Verminderung von $M_1$ und $M_2$ laut (I) führt, und anschließend dreht sich die Welle 4 der Stellsynchronmaschine 2 im Uhrzeigersinn, bis die Beziehung ( $\overline{\phi}'_{ri}, \overline{\phi}'_{si}$) = $\measuredangle$ sichergestellt ist. Nehmen wir an, daß der Operateur den Kraftmaßstabkoeffizienten n vergrößert hat, und nun die erste der Bedingungen (4) erfüllt ist. Dann schaltet der Umschalter 27 in der oben beschriebenen Weise die Ausgänge der Positionsgeber 9, 10 um, da das Ausgangssignal der Schaltung 29 der Ermittlung der Polarität des Verstimmungssignals sich infolge einer Änderung des Kraftmaßstabkoeffizienten n geändert hat. Die Geometrie der Magnetfelder ist für diesem Fall für verschiedene Betriebsarten in Fig. 5(c, d, e, f) dargestellt.

In Fig. 5c ist die Änderung der Geometrie der Magnetfelder der Synchronmaschinen 1, 2 für die Fälle gezeigt, wenn das vom Operateur erzeugte Moment $M_o$ vermindert wird oder eine Drehung der Führungswelle 5 erfolgt. Sei die Anfangsgeometrie der Magnetfelder der Synchronmaschinen 1, 2 in Fig. 5c mit gestrichelten Linie dargestellt: $\overline{\phi}'_{rz}$, $\overline{\phi}'_{sz}$, $\overline{\phi}'_{ri}$, $\overline{\phi}'_{si}$. Sei die Führungswelle 5 gegen Uhrzeigersinn so gedreht worden, daß das Magnetfeld des Läufers der Führungssynchronmaschine 1 aus der Position $\overline{\phi}'_{ri}$ in die Position $\overline{\phi}'_{ri}$ (ausgezogene Linie) gedreht wurde. Dabei vermindert sich der Winkel ($\overline{\phi}_{rz}$, $\overline{\phi}_{sz}$), da die Orientierung von $\overline{\phi}'_{sz}$ anfangs unverändert bleibt und das Verstimmungssignal am Ausgang der Vergleichseinheit 18 geändert wird, was zu einer Verminderung der Ständermagnetfelder der Führungs- und der Stellsynchronmaschine 1, 2 führt. Da das Belastungsmoment $M_i$ dabei unverändert bleibt und $M_2$ sich vermindert, dreht sich die Stellwelle 6 unter der Wirkung von $M_i$ gegen Uhrzeigersinn, und zusammen mit dem Übergang von $\overline{\phi}'_{ri}$ in die Position $\overline{\phi}_{ri}$ (ausgezogene Linie) gehen auch mit seiner Orientierung verbundene $\overline{\phi}'_{si}$, $\overline{\phi}'_{sz}$ in die Positionen $\overline{\phi}_{si}$ bzw. $\overline{\phi}_{sz}$ über. Wird die Stellwelle 6 danach beispielsweise fixiert, so stellt sich nach einem zu dem oben für Fig. 5a, b beschriebenen analogen Übergangsprozeß ein Gleichgewichtszustand mit folgender Orientierung der Magnetfelder der Synchronmaschinen 1, 2 ein: $\overline{\phi}'_{rz}$, $\overline{\phi}_{sz}$, $\overline{\phi}_{ri}$, $\overline{\phi}_{si}$. Auf diese Weise wird die Fernübertragung eines Winkels von der Führungswelle 5 auf die Stellwelle 6 sichergestellt. Es ist leicht verständlich, dass, wenn man für die Anfangsposition der Magnetfelder die gestrichelt eingezeichnete Darstellung annimmt und davon ausgeht, dass eine Drehung der Stellwelle 6 gegen Uhrzeigersinn (z.B. infolge eines Anstiegs von $M_I$) erfolgte, die Führungswelle 5 nach einem zu dem oben beschriebenen analogen Übergangsprozess sich um denselben Winkel gegen Uhrzeigersinn dreht. Somit erfolgt die Fernübertragung des Drehwinkels auch von der Stellwelle 6 auf die Führungswelle 5, deshalb können alle Übergangsprozesse, die für die Steuerung der Orientierung der Ständermagnetfelder der Synchronmaschinen 1, 2 vom Positionsgeber 9 der Welle 3 der Führungssynchronmaschine 1 kennzeichnend sind, auch bei der Steuerung der Orientierung der Ständermagnetfelder der Führungs- und der Stellsynchronmaschine 1, 2 vom Positionsgeber 10 bei bedingter Umbenennung der Wellen 5, 6 erfolgen. Es ist z.B. offensichtlich, dass bei einer Änderung des Kraftmasstabkoeffizienten n Prozesse vor sich gehen, die analog zu den oben beschriebenen sind, nur wird das Auftreten oder eine Änderung des Verstimmungssignals am Ausgang der Vergleichseinheit 18 durch eine Änderung des Koeffizienten n und somit auch des Winkels $\alpha$ hervorgerufen. Es ist nur zu vermerken, dass der Masstabkoeffizient n für Fig. 5 /c, d, e, f/ infolge der Gleichheit ( $\overline{\phi}_{ri}, \widehat{\phi}_{si}$ ) = 90° mit dem zum Skalieren erforderlichen Winkel $\alpha$ zwischen $\overline{\phi}_{rz}, \overline{\phi}_{sz}$ durch folgende Beziehung verbunden ist:

$$\alpha = \text{arc sin} \left( \frac{K_2 \phi_{ri} \phi_{si}}{n K_I \phi_{rz} \phi_{sz}} \right). \qquad (7)$$

Betrachten wir nun den Übergangsprozess im System der Drehwinkel- und Kraft-Fernübertragung bei einer Änderung der Richtung von $M_i$, der in Fig. 5d dargestellt ist. Nehmen wir an, dass $M_i$ bei der in Fig. 5c dargestellten Geometrie der Magnetfelder seine Richtung geändert hat, d.h. er wirkt gleichsinnig mit $M_2$. Folglich fangen $\overline{\phi}_{ri}$ und $\phi_{si}$, $\phi_{sz}$ mit einer grossen durch die Summe von $M_2$ und $M_i$ bestimmten Geschwindigkeit sich im Uhrzeigersinn zu drehen an, und wenn der Operateur die Führungswelle 5 fixiert, so nimmt $\overline{\phi}_{ri}$ nach einer Weile die gleiche Position wir auch $\phi_{rz}$ (Fig. 5d) ein, und danach ändert sich die Polarität des Signals, das der Differenz $(\alpha_z - \alpha_1)$ entspricht. Sobald die Polarität des Verstimmungssignals sich geändert hat, invertiert die Sollwertvorgabeeinheit 13 (Fig. 2) der Orientierung der Magnetfelder die Magnetfelder der Ständer, die aus den gestrichelt eingezeichneten Positionen $\overline{\phi}'_{sz}$, $\overline{\phi}'_{si}$ in die Positionen $\overline{\phi}_{sz}$, $\overline{\phi}_{si}$ übergehen, d.h. die Wirkungsrichtung von $M_I = M_2$ ändert sich. Der Operateur fühlt also die Änderung der Wirkungsrichtung von $M_i$ und wird im folgenden zur Erhaltung des unbeweglichen Zustandes der Führungswelle gezwungen, die Richtung des von ihm erzeugten Momentes $M_o$ zu ändern. Ausserdem ändert die Einheit 17 zur Ermittlung der vorgegebenen Verstimmung bei einer Änderung der Polarität des Verstimmungssignals $(\alpha_z - \alpha_1)$ die Lage des Winkels $\alpha'_o$ (Fig. 5d), bei dem vorher der Gleichgewichtszustand und die Gleichheit $n' = n$ erreicht wurden, auf eine in bezug auf $\overline{\phi}_{rz}$ symmetrische Lage $\alpha_o$. Anschliessend laufen alle Prozesse analog zu den oben beschriebenen ab, und es wird ein neuer Gleichgewichtszustand erreicht, bei dem das Ausgleichssignal der Vergleichseinheit 18 (Fig. 2) gleich Null ist.

Die Geometrie der diesem Zustand entsprechenden Magnetfelder ist aus Fig. 5e ersichtlich. Steigt $M_o$ an, so geht die Geometrie der Magnetfelder in die in Fig. 5f dargestellte über, und es wird ein Übergangsprozess wiederholt, der zu dem oben beschriebenen vollständig analog ist.

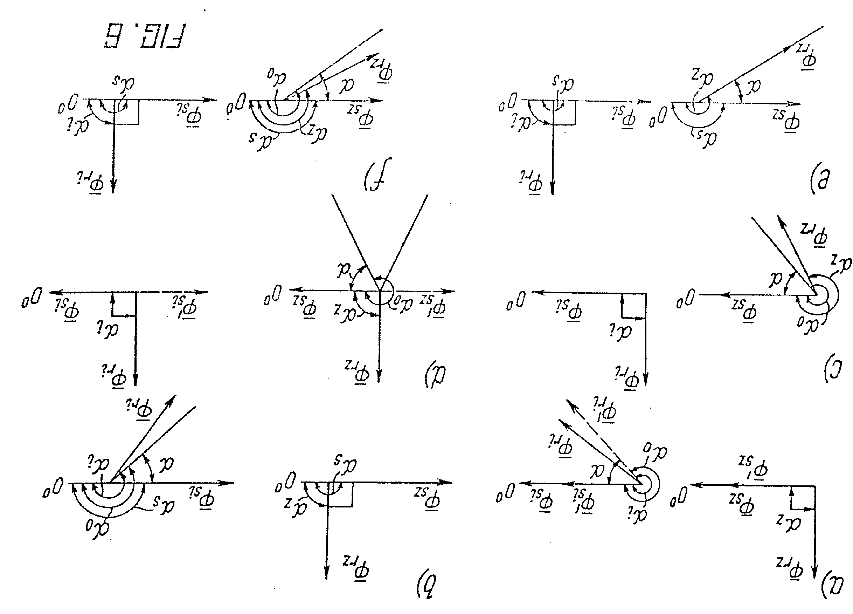

Sind die Ständerwicklungen der Synchronmaschinen 1, 2 gleichsinnig geschaltet, so kann man bedingt annehmen, dass die Magnetfelder ihrer Ständer gleiche Orientierung aufweisen, wie es in Fig. 6 /a, b, c, d, e, f/ und Fig. 7 /a, b, c, d, e, f/ gezeigt ist. Dann ist es zur Gewährleistung der entgegengesetzten Richtung von $M_1$ und $M_2$ erforderlich, $\overline{\phi}_{sz}$, $\overline{\phi}_{si}$ so zu richten, als ob sie zwischen den Magnetfeldern $\overline{\phi}_{rz}$, $\overline{\phi}_{ri}$ der Läufer von Synchronmaschinen 1, 2 angeordnet würden. Gibt man aus den oben genannten Gründen den Winkel zwischen $\overline{\phi}_{rz}$, $\overline{\phi}_{sz}$ gleich 90° vor, so wird die Beziehung für den Winkel $\alpha$

zwischen $\overline{\Phi}_{ri}$, $\overline{\Phi}_{si}$, bei dem der vorgegebene Kraftmasstabkoeffizient sichergestellt wird, durch die Beziehung (6) bestimmt. Die Orientierung der Magnetfelder für eine der Betriebsarten eines solchen Systems der Drehwinkel- und Kraft-Fernübertragung ist in Fig. 6a gezeigt. Bezeichnen wir die Orientierungen der Magnetfelder der Synchronmaschinen 1, 2 im Anfangszeitpunkt als $\overline{\Phi}_{rz}$, $\overline{\Phi}_{sz}$, $\overline{\Phi}'_{ri}$, $\overline{\Phi}'_{si}$. Nehmen wir an, dass die Führungswelle 5 fixiert ist, und $\overline{\Phi}'_{ri}$ infolge der Verminderung des Belastungsmomentes $M_i$ sich gegen Uhrzeigersinn dreht und sich wie $\Phi_{ri}$ orientiert, dabei sinkt $M_2$. Dann tritt am Ausgang der Vergleichseinheit 18 ein Verstimmungssignal auf, das dem Winkel zwischen der Orientierung $\overline{\Phi}_{ri}$ und dem laufenden Wert des Winkels $\alpha_o$ entspricht, was zu einer Verminderung von $\overline{\Phi}_{sz}$, $\overline{\Phi}_{si}$ und somit zur Verminderung von $M_1$ und Vergrösserung des Winkels ($\overline{\Phi}_{ri}$, $\overline{\Phi}_{si}$) so lange führt, bis die Anfangsorientierung der Magnetfelder bei geringeren Amplituden $\overline{\Phi}'_{sz}$, $\overline{\Phi}'_{si}$ der Ständermagnetfelder der Synchronmaschinen 1, 2 als die Anfangswerte $\overline{\Phi}_{sz}$, $\overline{\Phi}_{si}$ sich wiederherstellt. Ein gleichartiger Prozess läuft auch bei einer Vergrösserung von $M_i$. Dann dreht sich $\overline{\Phi}_{ri}$ im Sinne der Vergrösserung des Winkels ($\overline{\Phi}_{ri}$, $\wedge\overline{\Phi}_{si}$), wie es in Fig. 6b gezeigt ist (es wird dabei angenommen, dass die Wirkungsrichtung von $M_o$, $M_i$ entgegengesetzt zu den in Fig.6b dargestellten ist). Zur Wiederherstellung des gestörten Gleichgewichtes werden also $\overline{\Phi}_{sz}$, $\overline{\Phi}_{si}$ vergrössert, und unter der Wirkung von $M_2 > M_i$ dreht sich die Welle der Stellsynchronmaschine 2 im Sinne der Verminderung von ($\overline{\Phi}_{ri}$, $\overline{\Phi}_{si}$) und somit auch $M_2$. Dabei wird der neue Gleichgewichtszustand bei grösseren Werten von $\overline{\Phi}_{sz}$, $\overline{\Phi}_{si}$ erreicht, und die Rückführung der Kraft auf die Führungswelle 5 wird sichergestellt.

Vergrössert der Operateur den Kraftmasstabkoeffizienten n in einer solchen Weise, dass die zweite der Beziehungen (4) erfüllt wird, so gewährleistet die Sollwertvorgabeeinheit 13 der Orientierung der Magnetfelder mit Hilfe der Formierungseinheit 22 des Stroms die Orientie-

rung von $\overline{\Phi}_{sz}$, $\overline{\Phi}_{si}$ senkrecht zu $\overline{\Phi}_{ri}$. Dann laufen im System, für das in Fig. 6 /c, d, e, f/ die Geometrie der Magnetfelder gezeigt ist, Prozesse ab, die analog zu den oben für Fig. 5/c, d, e, f/beschriebenen ist. Unwesentliche Unterschiede gibt es nur für Fig. 6 d, die darin bestehen, dass das Zusammenfallen der Orientierung von $\overline{\Phi}_{rz}$, $\overline{\Phi}_{ri}$ bei fixierter Lage von $\overline{\Phi}_{rz}$ nach einer Drehung von $\Phi_{ri}$ um einen kleineren Winkel erfolgt, als dieses für einen Übergang aus dem in Fig. 5c gezeigten Zustand zu dem in Fig. 5d gezeigten Zustand erforderlich ist.

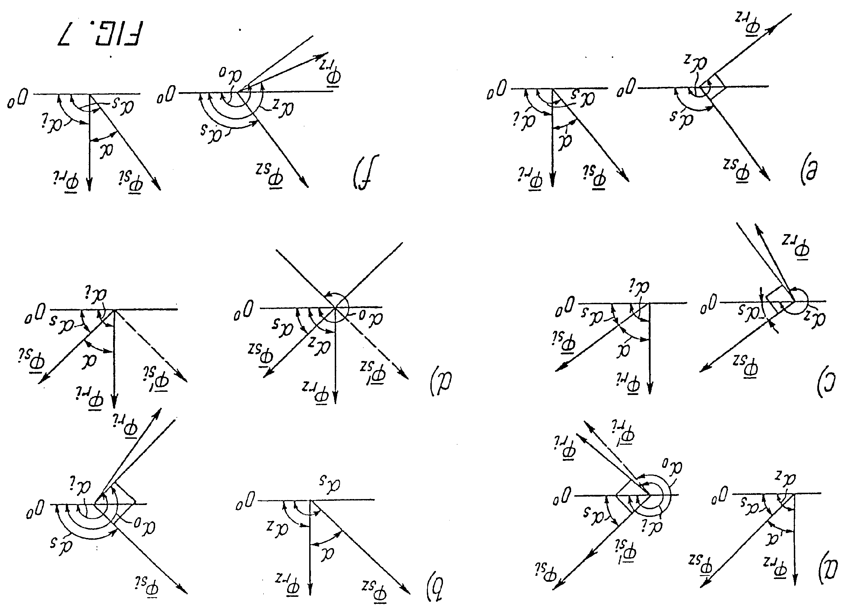

Das erfindungsgemässe System der Drehwinkel- und Kraft-Fernübertragung kann einen Winkel zwischen den Magnetfeldern des Ständers und des Läufers einer der Synchronmaschinen 1, 2 stets gleich $\alpha$ aus (6) oder (7) und einen Winkel zwischen den Magnetfeldern des Ständers und des Läufers einer anderen Synchronmaschine 2, 1 gleich 90° infolge der Umwandlung des Ausgangssignals der Vergleichseinheit 18 in der Korrektureinheit 24 aufrechterhalten. Die Zeigerdiagramme für die Orientireung von Magnetfeldern der Läufer und Ständer der Synchronmaschinen 1, 2 sind für diesen Fall in Fig. 7 /a, b, c, d, e, f/ dargestellt. Die Arbeit des Systems der Drehwinkel--und Kraft-Fernübertragung und die Reihenfolge der Übergänge von einer Orientierung der Magnetfelder zu einer anderen sind für diesen Fall analog zu den für Fig. 5 /a, b, c, d, e, f/ beschriebenen. Der Masstabkoeffizient wird für Fig. 7 bei der Anwendung von denselben Synchronmaschinen 1, 2 wie für Fig. 6 selbsverständlich einen reziproken Wert dadurch aufweisen, dass die Winkel zwischen $\overline{\Phi}_{rz}$, $\overline{\Phi}_{sz}$ und $\overline{\Phi}_{ri}$, $\overline{\Phi}_{si}$ im Gleichgewichtszustand ihre Plätze im Vergleich zu Fig. 6 umtauschen.

Die in Fig. 5 /a, b, c, d, e, f/ dargestellten Zeigerdiagramme beschreiben die Arbeit des Systems der Drehwinkel- und Kraft-Fernübertragung, dessen eine der Varianten in Fig. 3 dargestellt ist. Die Arbeit der angegebenen Variante des Systems läuft folgenderweise ab. Die Schaltung 31 zur Ermittlung der Polarität des Verstimmungs-

- 30 -

signals bildet am Ausgang ein Signal, das "-1" entspricht, wenn am Ausgang des Vergleichselementes 32 ein positiv gepoltes Signal anliegt, und ein Signal, das "+1" entspricht, wenn das Signal negativ gepolt ist. So wird das dem Winkel von - 90° oder + 90° entsprechende, vom Ausgang des Vervielfachers 34 eintreffende Signal im Addierer 35 mit dem Ausgangssignal des Umschalters 27 addiert. In Fig.5(a,b) gelangt an den Eingang des Addierers 35 ein Signal vom Positionsgeber 9 und in Fig. 5 (c, d, e, f) dieses vom Positionsgeber 10. Die Signale werden vom Umschalter 27, wie es oben angegeben wurde, nach dem Ergebnis des Vergleiches der Grösse des Kraftmassstabkoeffizienten n mit der Grösse des Verhältnisses $\frac{M_{D1}}{M_{D2}}$ durch die Schaltung 29 zur Ermittlung der Polarität umgeschaltet. Das Ausgangssignal des Addierers 35 gibt die Orientierung der Magnetfelder der Ständer der Synchronmaschinen 1, 2 vor. Stellt es einen Kode des Winkels dar bzw. ist es in einen Kode aus analoger Form umgesetzt, so wird die Formierungseinheit 22 des Stroms angewendet, deren Struktur in Fig. 3 gezeigt ist. Das angegebene Signal wird den Adresseingängen eines Festwertspeichers 42 zugeführt, in welchem Kodes der Dauern und der Polarität der Stromversorgungsimpulse für die drei Wicklungen der Synchronmaschinen 1, 2, die die Orientierung der Magnetfelder ihrer Ständer nach der durch den Winkelkode an den Adresseingängen des Festwertspeichers 42 vorgegebenen Richtung gewährleisten, abgelegt sind. Die Kodes der Dauern werden aus dem Festwertspeicher 42 in Rückwärtszähler 45 über die Eingänge 43 der Kode-Impulsdauer-Umsetzer 44 eingelesen (in der Zeichnung ist nur ein Zähler 45 gezeigt). Die Einlesefrequenz dieser Kodes ist konstant, und das Einlesen wird nach den am Eingang 68 der Umsetzer 44 eintreffenden Ausgangsimpulsen des Frequenzuntersetzers 67 ausgeführt, der die Frequenzteilung des Generators 66 ausführt. Nach dem Einlesen der Kodes treten an invertierenden Borgenausgängen der Zähler 45 logische Einsen auf, die den Anfang der Speiseimpulse der Wicklungen bestim-

men. Dabei erscheinen die logischen Einsen auch an den Eingängen 48 der UND-Glieder 46, wodurch der Durchgang der Impulse vom Borgenausgang des Rückwärtszählers 63 an die Subtraktionseingänge 47 der Zähler 45 freigegeben wird. Die Frequenz dieser Impulse ist umgekehrt proportional zum Kode des Moduls des Steuersignals, das von der Schaltung 61 zur Ermittlung des Moduls an den Setzeingang 62 des Rückwärtszählers eintrifft. Die Folgeperiode der Impulse ist gleich der Folgeperiode der Impulse des Generators 66, multipliziert mit dem Kode des Moduls des Steuersignals, und somit ist diesem Kode auch die Dauer der Impulse am Borgenausgang der Rückwärtszähler proportional. Die Ausgangimpulse des Borgers enden, wenn die Zahlen im Zähler 45 gleich Null sind, dabei erscheint an den Borgenausgängen der Zähler 45 ein logisches 0-Signal, das das Eintreffen der Impulse vom Ausgang des Borgers des Rückwärtszählers 63 an die Subtraktionseingänge 47 der Zähler 45 über die UND-Glieder 46 sperrt. Das vom Ausgang der Schaltung 60 der Ermittlung der Polarität an die Sollwertvorgabeeingänge 59 der Umschalter 50 eintreffende Steuersignal gibt den Durchgang der Ausgangsimpulse der Umsetzer 44 über die UND-Glieder 51 oder die UND-Glieder 52 frei. Dabei werden die Wicklungen je nach der Polarität der an den Sollwertvorgabeeingängen 58 eintreffenden Signale an den einen oder anderen Pol der Spannungsquelle 57 mit Hilfe des Schalters 55 oder 56 angeschlossen. Das Exklussiv-ODER-Glied 53 führt je nach dem Ausgangssignal der Schaltung 60 der Ermittlung der Polarität eine Umkehr der Polarität der Speiseimpulse der Wicklungen aus.

Das Steuersignal wird am Ausgang der Korrektureinheit 24 formiert, deren Struktur verschieden sein kann. Diese Korrektureinheit 24 führt die Verarbeitung des Verstimmungssignals vom Ausgang der Vergleichseinheit 18 aus, an deren Subtraktionseingang z.B. ein Signal vom Positionsgeber 9 oder 10 je nach dem Zustand des Umschalters 27 eintrifft. Es ist zu vermerken, dass die Signale an die Eingänge des Addierers 35 und der Vergleichseinheit 18 von verschiedenen Ausgängen des Umschalters 27 eintreffen.

Die Einheit 17 zur Ermittlung der vorgegebenen Verstimmung addiert je nach der Polarität des durch die Schaltung 38 gebildeten Verstimmungssignals ein dem Winkel von + (90° -$\alpha$) oder -(90° -$\alpha$) entsprechendes Signal mit Hilfe des Addierers 39 mit dem Signal eines der Positionsgeber 9, 10, das an den Informationseingang 14 der Sollwertvorgabeeinrichtung der Amplitude der Magnetfelder eintrifft. Dabei wird das Signal, das der Grösse des durch den Umsetzer 36 aus (6) oder (7) je nach der Grösse n berechneten Winkels $\alpha$ entspricht, im Vervielfacher 37 mit einem Signal multipliziert, das je nach der Polarität des Verstimmungssignals dem Wert "+1" oder "-1" entspricht, und gelangt an einen der Eingänge des Addierers 39. Auf diese Weise erfolgt die Formierung der Magnetfelder der Ständer der Synchronmaschinen 1, 2, deren Zeigerdiagramme a, b, c, e, f in Fig. 5 dargestellt sind.

Für die Realisierung von Systemen der Drehwinkel- und Kraft-Fernübertragung, für die in Fig. 6, 7 die Zeigerdiagramme der Magnetfelder gezeigt sind, ist die gleichsinnige Schaltung der Ständerwicklungen der Synchronmaschinen erforderlich. Dabei ist in die Einheit 17 zur Ermittlung der vorgegebenen Verstimmung ein Addierer 69 eingefügt (Fig. 4), der einen Winkel von 90° zu der oben eingeführten Grösse des Winkels $\alpha$ zwischen den Magnetfeldern des Läufers und des Ständers einer der Synchronmaschinen 1, 2 addiert, um im Gleichgewichtszustand einen Winkel zwischen $\overline{\Phi}_{rz}$, $\overline{\Phi}_{ri}$ gleich (90° +$\alpha$) und nicht (90° -$\alpha$), wie es in der in Fig. 3 gezeigten Variante der Fall ist, sicherzustellen. Die Zuführung des Ausgangssignals des Umsetzers 36 des Kraftmasstabkoeffizienten dem Sollwertvorgabeeingang des Vervielfachers 34 gewährleistet die Erhaltung der in Fig. 7 (a, b, c, d, e, f) dargestellten Orientierung der Magnetfelder. Zur Realisierung der in Fig. 7 dargestellten Zeigerdiagramme a, b, c, d, e, f, ist dem Sollwertvorgabeeingang des Vervielfachers 34 ein Signal zuzuführen, das dem Winkel 90° wie auch in Fig. 3 entspricht (in Fig. 4 ist diese Variante nicht gezeigt).

Eine Besonderheit der in Fig. 4 gezeigten Variante besteht in der Ausnutzung der Schaltung 70 der Ermittlung der Polarität des Verstimmungssignals, die für die Sollwertvorgabeeinheit 13 der Orientierung und die Einheit 17 der Ermittlung der vorgegebenen Verstimmung gemeinsam ist.

Es sei angenommen, dass im Anfangszeitpunkt das Ausgangssignal des Integrators 71 wie auch die Grösse des Ausgangssignals der Vergleichseinheit 18 gleich Null ist. Dabei gelangt an den Steuereingang der Formierungseinheit 22 des Stroms in den Wicklungen ein Nullsignal. Beim Erscheinen eines Signals am Ausgang der Vergleichseinheit 18 tritt am Ausgang der Vergleichsschaltung 74 ein Signal auf, dessen Modulkode über die Schaltung 61 (Fig. 3) der Modulermittlung an den Rückwärtszähler 63 bei der in Fig. 3 gezeigten Struktur der Formierungseinheit 22 des Stroms in den Wicklungen gelangt, wobei seine Polarität nicht berücksichtigt wird. Gleichzeitig steigt die Grösse des Ausgangssignals des Integrators 71 (Fig. 4) an bzw. nimmt bei einer Änderung der Polarität des Ausgangssignals der Vergleichseinheit 18 ab. Nach dem Abschluss des Übergangsprozesses wird das Ausgangssignal der Vergleichseinheit 18 gleich Null, und die Amplituden der Magnetfelder der Ständer der Synchronmaschinen 1, 2 werden nur durch den Modulwert des Ausgangssignals des Integrators 71 bestimmt. Steigt der in Fig. 5 gezeigte Winkel zwischen den Magnetfeldern des Läufers und des Ständers der Synchronmaschine 2 infolge einer Vergrösserung von $M_i$ an, so wird das Ausgangssignal des Vervielfachers 73 die gleiche Polarität wie das Verstimmungssignal der Führungs- und der Stellwelle 5 bzw. 6 aufweisen, d.h. das Ausgangssignal der Vergleichsschaltung 74 steigt an, was zur Vergrösserung von $M_2$ und zur Rückkehr der Wellen der Synchronmaschinen 1, 2 in die Position führt, bei der das Ausgangssignal der Vergleichseinheit 18 gleich Null ist. Falls sich aber $M_i$ vermin-

dert, so bleibt die Polarität des Ausgangssignals des Vervielfachers 73 erhalten, während das Ausgangssignal der Vergleichseinheit 18 seine Polarität auf die entgegengesetzte ändert. Somit vermindert sich die Grösse des Ausgangssignals der Korrektureinheit 24, was zu einer Verminderung von $M_1$, $M_2$ und zur Wiederherstellung des Gleichgewichtszustandes führt, was durch den Nullwert des Ausgangssignals der Vergleichseinheit 18 gekennzeichnet wird.

Industrielle Anwendbarkeit

Das System der Drehwinkel- und Kraft-Fernübertragung zwischen den Ausführungs- und Stellwellen kann in Master-Slave-Manipulatoren Anwendung finden.

- 35 -

PATENTANSPRÜCHE

1. System der Drehwinkel- und Kraft-Übertragung zwischen der Führungs- und der Stellwelle, das eine Führung- und eine Stellsynchronmaschine (1, bzw. 2) enthält, deren Wellen (3, 4) mit einer zugehörigen Führungs- bzw. Stellwelle (5 bzw. 6) verbunden sind und Positionsgeber (9, 10) besitzen, die elektrisch mit Eingängen (11, 12) einer Sollwertvorgabeeinheit (13) der Orientierung der Ständermagnetfelder der Führungs- und der Stellsynchronmaschine sowie mit Informationseingängen (15, 14) einer Sollwertvorgabeeinrichtung (16) der Amplitude der Ständermagnetfelder der Führungs- und der Stellsynchronmaschine verbunden sind, deren Ausgang elektrisch mit dem Steuereingang (21) einer Formierungseinheit (22) des Stroms in Wicklungen der Führungs- und der Stellsynchronmaschine verbunden ist, und an deren Sollwerteingabeeingang (23) der Ausgang der Sollwertvorgabeeinheit (13) der Orientierung von Ständermagnetfeldern der Führungs- und der Stellsynchronmaschine angeschaltet ist, während deren Ausgänge an die elektrisch miteinander verbundenen, entsprechenden Wicklungen der Führungs- und der Stellsynchronmaschine (1 bzw. 2) angeschlossen sind, dadurch g e k e n n z e i c h n e t, dass die Sollwertvorgabeeinrichtung (16) der Amplitude der Ständermagnetfelder der Führungs- und der Stellsynchronmaschine eine Einheit (17) zur Erfassung der vorgegebenen Verstimmung der Wellen der Führungs- und der Stellsynchronmaschine enthält, die einen Sollwertvorgabeeingang (20), dem ein Signal zugeführt wird, welches dem Masstabekoeffizienten (n) der auf die Welle (3) der Führungssynchronmaschine (1) rückgeführten Kraft entspricht, und Informationseingänge, die als Informationseingänge (14, 15) der Sollwertvorgabeeinrichtung (16) der Amplitude der Ständermagnetfelder der Führungs- und der Stellsynchronmaschine dienen, sowie eine Vergleichseinheit (18) besitzt, deren Informationseingänge an die Informationseingänge der Einheit (17) zur Erfassung der vorgegebenen Verstimmung der Wellen der Führungs- und der Stellsynchronmaschine und deren Sollwertvorgabeeingang (19)

an den Ausgang der Einheit (17) zur Erfassung der vorgegebenen Verstimmung der Wellen der Führungs und der Stellsynchronmaschine angeschlossen sind, während deren Ausgang als Ausgang der Sollwertvorgabeeirichtung (16) der Amplitude der Ständermagnetfelder der Führungs- und der Stellsynchronmaschine dient.

2. System nach Anspruch 1, dadurch g e k e n n - z e i c h n e t, dass es mit einer Korrektureinheit (24) ausgestattet ist, deren Eingang an den Ausgang der Sollwertvorgabeeinrichtung (16) der Amplitude der Ständermagnetfelder der Führungs- und der Stellsynchronmaschine angeschlossen ist, während der Ausgang mit dem Steuereingang (21) der Formierungseinheit (22) des Stroms in den Wicklungen der Führungs- und der Stellsynchronmaschine verbunden ist.

3. System der Fernübertragung nach Anspruch 1 oder 2, dadurch g e k e n n z e i c h n e t, dass es mit einem Umschalter (27), dessen Informationseingänge (25, 26) an die Positionsgeber (9, 10) der Wellen der Führungs- und der Stellsynchronmaschine angeschlossen sind, und einer Schaltung (29) zur Ermittlung der Polarität des Verstimmungssignals ausgestattet ist, bei der der eine Eingang an den Sollwertvorgabeeingang (20) der Einheit (17) zur Erfassung der vorgegebenen Verstimmung der Wellen der Führungs- und der Stellsynchronmaschine angeschlossen ist, dem anderen Eingang (30) ein Signal zugeführt wird, das dem Verhältnis $\left(-\frac{M_{p1}}{M_{p2}}-\right)$ der Anlaufmomente der Führungs- und der Stellsynchronmaschine (2, 1) entspricht, und der Ausgang an den Steuereingang (28) des Umschalters (27) angeschlossen ist, dessen Ausgänge an die Eingänge (11, 12) der Sollwertvorgabeeinheit (13) der Orientierung der Ständermagnetfelder der Führungs- und der Stellsynchronmaschine und an die Informationseingänge (15, 14) der Sollwertvorgabeeinrichtung (16) der Amplitude der Ständermagnetfelder der Führungs- und der Stellsynchronmaschine angeschlossen sind.

4. System der Fernübertragung nach Anspruch 1 oder 2, dadurch g e k e n n z e i c h n e t, dass die Sollwertvorgabeeinheit (13) der Orientierung der Ständermagnetfelder der Führungs- und der Stellsynchronmaschine eine Reihenschaltung aus einer Schaltung (31) der Ermittlung der Polarität des Verstimmungssignals der Wellen der Führungs- und der Stellsynchronmaschine, deren Eingänge als Eingänge der Sollwertvorgabeeinheit (13) der Orientierung der Ständermagnetfelder der Führungs- und der Stellsynchronmaschine dienen, einem Vervielfacher (34), der einen Sollwertvorgabeeingang aufweist, dem ein Signal zugeführt wird, das dem Winkel zwischen den Magnetfeldern des Läufers und des Ständers der Führungs- (1) oder der Stellsynchronmaschine (2) entspricht, und einem Addierer (35) enthält, bei dem der eine Eingang an den Ausgang des Vervielfachers (34) angeschlossen ist, der andere Eingang mit einem der Eingänge der Schaltung (31) der Ermittlung der Polarität des Verstimmungssignals der Wellen der Führungs- und der Stellsynchronmaschine verbunden ist und der Ausgang als der Ausgang der Sollwertvorgabeeinheit (13) der Orientierung der Ständermagnetfelder der Führungs- und der Stellsynchronmaschine dient.

5. System nach Anspruch 2, dadurch g e k e n n- z e i c h n e t, dass die Einheit (17) der Ermittlung der vorgegebenen Verstimmung der Wellen der Führungs- und der Stellsynchronmaschine einen Umsetzer (36) des Kraftmasstabkoeffizienten in einen Winkel zwischen den Magnetfeldern des Läufers und des Ständers der Führungs- oder der Stellsynchronmaschine, einen Vervielfacher (37), dessen erster Eingang elektrisch mit dem Ausgang des Umsetzers (36) des Kraftmasstabkoeffizienten in den Winkel zwischen den Magnetfeldes des Läufers und des Ständers der Führungs- oder der Stellsynchronmaschine verbunden ist, eine Schaltung (38) der Ermittlung der Polarität des Verstimmungssignals der Wellen der Führungs- und der Stellsynchronmaschine, deren Ausgang an den zweiten Eingang des Vervielfachers (37) angeschlossen ist, und einen Addierer (39) enthält, bei dem der eine Eingang an den Ausgang des Vervielfachers (37) und der andere Eingang an einen der Eingänge der Schaltung (38) der Ermittlung der Polarität des Verstimmungssignals der Wellen der Führungs- und der Stellsynchronmaschine, die als Informationseingänge der Einheit (17) der Ermittlung der vorgegebenen Verstimmung der Wellen der Führungs- und der Stellsynchronmaschine dienen, angeschlossen sind, und der Ausgang als Ausgang der Einheit (17) der Ermittlung der vorgegebenen Verstimmung der Wellen der Führungs- und der Stellsynchronmaschine dient.

6. System nach Anspruch 3, dadurch g e k e n n z e i c h n e t, dass die Einheit (17) der Ermittlung der vorgegebenen Verstimmung der Wellen der Führungs- und der Stellsynchronmaschine einen Umsetzer (36) des Kraftmassstabkoeffizienten in einen Winkel zwischen den Magnetfeldern des Läufers und des Ständers der Führungs- oder der Stellsynchronmaschine, einen Vervielfacher (37), dessen erster Eingang elektrisch mit dem Ausgang des Umsetzers (36) des Kraftmassstabkoeffizienten in den Winkel zwischen den Magnetfeldern des Läufers und des Ständers der Führungs- oder der Stellsynchronmaschine verbunden ist, eine Schaltung (38) der Ermittlung der Polarität des Verstimmungssignals der Wellen der Führungs- und der Stellsynchronmaschine, deren Ausgang an den zweiten Eingang des Vervielfachers (37) angeschlossen ist, und einen Addierer (39) enthält, bei dem der eine Eingang an den Ausgang des Vervielfachers (37) und der andere Eingang an einen der Eingänge der Schaltung (38) der Ermittlung der Polarität des Verstimmungssignals der Wellen der Führungs- und der Stellsynchronmaschine, die als Informationseingänge der Einheit (17) der Ermittlung der vorgegebenen Verstimmung der Wellen der Führungs- und der Stellsynchronmaschine dienen, angeschlossen sind, und der Ausgang als Ausgang der Einheit (17) der Ermittlung der vorgegebenen Verstimmung der Wellen der Führungs- und der Stellsynchronmaschine dient.

7. System nach Anspruch 4, dadurch g e k e n n z e i c h n e t, dass die Einheit (17) der Ermittlung der vorgegebenen Verstimmung der Wellen der Führungs- und der Stellsynchronmaschine einen Umsetzer (36) des Kraftmassstabkoeffizienten in einen Winkel zwischen den Magnetfeldern des Läufers und des Ständers der Führungs-

oder der Stellsynchronmaschine, einen Vervielfacher (37), dessen erster Eingang elektrisch mit dem Ausgang des Umsetzers (36) des Kraftmasstabkoeffizienten in den Winkel zwischen den Magnetfeldern des Läufers und des Ständers der Führungs- oder der Stellsynchronmaschine verbunden ist, eine Schaltung (38) der Ermittlung der Polarität des Verstimmungssignals der Wellen der Führungs- und der Stellsynchronmaschine, deren Ausgang an den zweiten Eingang des Vervielfachers (37) angeschlossen ist, und einen Addierer (39) enthält, bei dem der eine Eingang an den Ausgang des Vervielfachers (37) und der andere Eingang an einen der Eingänge der Schaltung (38) der Ermittlung der Polarität des Verstimmungssignals der Wellen der Führungs- und der Stellsynchronmaschine, die als Informationseingänge der Einheit (17) der Ermittlung der vorgegebenen Verstimmung der Wellen der Führungs- und der Synchronmaschine dienen, angeschlossen sind, und der Ausgang als Ausgang der Einheit (17) der Ermittlung der vorgegebenen Verstimmung der Wellen der Führungs- und der Stellsynchronmaschine dient.

8. System nach Anspruch 5 oder 6 oder 7, dadurch g e k e n n z e i c h n e t, dass die Einheit (17) zur Ermittlung der vorgegebenen Verstimmung der Wellen der Führungs- und der Stellsynchronmaschine zusätzlich einen Addierer (69) enthält, bei dem der eine Eingang an den Ausgang des Umsetzers (36) des Kraftmasstabkoeffizienten in den Winkel zwischen den Magnetfelder des Läufers und des Ständers der Führungs- oder der Stellsynchronmaschine angeschlossen ist, dem anderen Eingang ein Signal zugeführt wird, das dem Drehwinkel des Ständermagnetfeldes der Führungs- (1) oder der Stellsynchronmaschine (2) um 90° entspricht, und der Ausgang an den ersten Eingang des Vervielfachers (37) geschaltet ist.

9. System der Fernübertragung nach Anspruch 2, dadurch g e k e n n z e i c h n e t, dass die Korrektureinheit (24) einen Integrator (71), eine Schaltung (72) zur Ermittlung des Signalmoduls, deren Eingang am Ausgang des Integrators (71) liegt, einen Vervielfacher (73), dessen erster Eingang an den Ausgang der Schaltung (72) zur Ermittlung des Signalmoduls angeschlossen ist, dem zweiten Eingang ein Signal zugeführt wird, das der Polarität des Verstimmungssignals des Wellen (3, 4) der Führungs- und der Stellsynchronmaschine (1, 2) entspricht, und eine Vergleichsschaltung (74) enthält, bei der der erste Eingang an den Ausgang des Vervielfachers (73) angeschlossen ist, der zweite Eingang mit dem Eingang des Integrators (71) verbunden ist und der Verbindungspunkt als Eingang der Korrektureinheit (24) dient, während der Ausgang der Vergleichsschaltung (74) als Ausgang der Korrektureinheit (24) dient.

10. System nach Anspruch 4, dadurch g e k e n n z e i c h n e t, dass die Korrektureinheit (24) einen Integrator (71), eine Schaltung (72) zur Ermittlung des Signalmoduls, deren Eingang am Ausgang des Integrators (71) liegt, einen Vervielfacher (73), bei dem der erste Eingang an den Ausgang der Schaltung (72) der Ermittlung des Signalmoduls angeschlossen ist, dem zweiten Eingang ein Signal zugeführt wird, das der Polarität des Verstimmungssignals des Wellen (3, 4) der Führungs- und der Stellsynchronmaschine (1, 2) entspricht, und eine Vergleichsschaltung (74) enthält, deren erster Eingang an den Ausgang des Vervielfachers (73) angeschlossen ist, der zweite Eingang mit dem Eingang des Integrators (71) verbunden ist und der Verbindungspunkt als Eingang der Korrektureinheit (24) dient, während der Ausgang der Vergleichsschaltung (74) als Ausgang der Korrektureinheit (24) dient.

11. System nach Anspruch 10, dadurch g e k e n n z e i c h n e t, dass der zweite Eingang des Vervielfachers (73) der Korrektureinheit (24) an den Ausgang der Schaltung (31) der Ermittlung der Polarität des Verstimmungssignals der Wellen der Führungs- und der Stellsynchronmaschine der Sollwertvorgabeeinheit (13) der Orientierung der Ständermagnetfelder der Führungs- und der Stellsynchronmaschine angeschlossen ist.

12. System der Fernübertragung nach Anspruch 5, dadurch g e k e n n z e i c h n e t, dass die Korrektureinheit (24) einen Integrator (71), eine Schaltung (72) zur Ermittlung des Signalmoduls, deren Eingang am Ausgang des Integrators (71) liegt, einen Vervielfacher (73), dessen erster Eingang an den Ausgang der Schaltung (72) der Ermittlung des Signalmoduls angeschlossen ist, dem zweiten Eingang ein Signal zugeführt wird, das der Polarität der Verstimmungssignals der Wellen (3, 4) der Führungs- und der Stellsynchronmaschine (1 bzw. 2) entspricht, und eine Vergleichsschaltung (74) enthält, deren erster Eingang an den Ausgang des Vervielfachers (73) angeschlossen ist, der zweite Eingang mit dem Eingang des Integrators (71) verbunden ist und der Verbindungspunkt als Eingang der Korrektureinheit (24) dient, während der Ausgang der Vergleichsschaltung (74) als Ausgang der Korrektureinheit (24) dient.

13. System der Fernübertragung nach Anspruch 12, dadurch g e k e n n z e i c h n e t, dass der zweite Eingang des Vervielfachers (73) der Korrektureinheit (24) an den Ausgang der Schaltung (38) der Ermittlung der Polarität des Verstimmungssignals der Wellen der Führungs- und der Stellsynchronmaschine der Einheit (17) der Ermittlung der vorgegebenen Verstimmung der Wellen der Führungs- und der Stellsynchronmaschine angeschlossen ist.

FIG. 1

FIG. 2

FIG. 3.

0267301

FIG. 4

FIG. 5

FIG. 6

FIG. 7

## I. CLASSIFICATION OF SUBJECT MATTER (if several classification symbols apply, indicate all) *

According to International Patent Classification (IPC) or to both National Classification and IPC

IPC⁴ - G08C19/38,HO2K29/06

## II. FIELDS SEARCHED

| Minimum Documentation Searched 7 | |
|---|---|
| Classification System | Classification Symbols |
| IPC⁴ | HO2K29/00-29/12,G08C19/00-19/38,B25J3/00,B63H21/00 -21/22,G05G7/00-7/08 |

Documentation Searched other than Minimum Documentation
to the Extent that such Documents are Included in the Fields Searched *

## III. DOCUMENTS CONSIDERED TO BE RELEVANT *

| Category * | Citation of Document, 11 with indication, where appropriate, of the relevant passages 12 | Relevant to Claim No. 13 |
|---|---|---|
| A | US, A, 4302138 (Alain Zarutiansky) 24 November 1981 (24.11.81), see the abstract | 1-13 |
| A | SU,AI, 634428,(Dalnevostochny ordena Trudovogo Krasnogo Znameni politekhnichesky institut im.V.V. Kuibysheva).30 November 1978 (30.11.78), see column 4, lines 33-48 | 1-13 |
| A | "Proektirovanie sledyaschikh sistem dvustoronnego deistvia", pol redaktsiei V.S. Kuleshova, 1980, Mashinostroenie (Moscow), page 141, figure IV.21 | 1-13 |
| A | FR, AI, 2420177, (THE SINGER COMPANY) 12 October 1979 (12.10.79), see page 6, lines 1-11, figure 2 | 1-13 |
| A | DE, B2, 1616025,(N.V. Nieuwe Rotterdamsche Instrumentenfabriek Observator) 10 February 1977 (01.02.77), see column 1, lines 1-24, figure 1 | 1-13 |

.../...

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 27 July 1987 (27.07.87) | 17 August 1987 (17.08.87) |
| International Searching Authority | Signature of Authorized Officer |
| ISA/SU | |

Form PCT/ISA/210 (second sheet) (January 1985)

0267301

| III. DOCUMENTS CONSIDERED TO BE RELEVANT  (CONTINUED FROM THE SECOND SHEET) | | |
|---|---|---|
| Category * | Citation of Document, with indication, when appropriate, of the relevant passages | Relevant to Claim No |
| A | DE, B2, 1506380 (Jungner Instrument AB), 01 February 1973 (01.02.73), see column 1, lines 1-32, figure 2 | 1-13 |